# EUROPÄISCHE PATENTSCHRIFT

(11) **EP 1 819 642 B1**
(45) Veröffentlichungstag und Bekanntmachung des Hinweises auf die Patenterteilung: **02.03.2011**
(21) Anmeldenummer: 05824583.8
(22) Anmeldetag: 09.12.2005
(51) Int. Cl.: C03B 35/24, B65G 49/05

(54) **VERFAHREN UND VORRICHTUNG ZUM KONTAKTLOSEN TRANSPORTIEREN ODER LAGERN VON GLAS ODER GLASKERAMIK**
METHOD AND DEVICE FOR THE CONTACTLESS TRANSPORT OR STORAGE OF GLASS OR VITROCERAMICS
PROCEDE ET DISPOSITIF DE TRANSPORT OU DE STOCKAGE SANS CONTACT DE VERRE OU DE VITROCERAMIQUE

(30) Priorität: 11.12.2004 DE 102004059727
(43) Veröffentlichungstag der Anmeldung: 22.08.2007
(73) Patentinhaber: Schott AG, 55122 Mainz (DE)
(72) Erfinder: NÜTTGENS, Sybill, 60316 Frankfurt (DE); LANGE, Ulrich, 55122 Mainz (DE); CLAUSS, Michael, 65719 Hofheim (DE); LANGSDORF, Andreas, 55128 Ingelheim (DE); HAHN, Gerhard, 55595 Allenfeld (DE)
(74) Vertreter: Blumbach - Zinngrebe
(86) Internationale Anmeldenummer: PCT/EP2005/013246
(87) Internationale Veröffentlichungsnummer: WO 2006/061244

(56) Entgegenhaltungen:
- FR-A- 1 497 264
- FR-A- 2 024 397
- GB-A- 1 308 632
- US-A- 3 526 491
- US-A- 4 804 081
- US-A- 5 876 474
- US-B1- 6 192 711
- US-B1- 6 781 684

## Beschreibung

Die Erfindung betrifft im allgemeinen den Transport von Körpern während eines Produktionsablaufs und insbesondere das kontaktlose Transportieren und Lagern von Körpern aus Glas auf einem Gaskissen.

Bei der Herstellung von Glaskeramik wird üblicherweise eine zu keramisierende Glasplatte auf eine Unterlage aufgelegt und mit dieser Unterlage zusammen durch einen Keramisierungsofen transportiert. Solche Keramisierungsöfen sind vielfach als Durchlauföfen konzipiert, um eine ununterbrochenen Produktionsablauf zu ermöglichen. Ein derartiger Durchlaufofen umfaßt in der Regel verschiedene Kammern, welche auf unterschiedlichen Temperaturen gehalten werden. Beim Durchlaufen der Kammern des Ofens wird eine zu keramisierende Platte dann einem zeitlichen Temperaturverlauf ausgesetzt, um die Keramisierung zu bewerkstelligen. Die Temperatur einer Glasplatte während des Keramisierens liegt zwischen 750 und 950 °C. Der günstigste Temperaturverlauf zur Keramisierung hängt dabei insbesondere von der verwendeten Glasart ab.

Um eine gute Keramisierung zu erreichen, ist es wichtig, daß speziell im Bereich der Keimbildungstemperatur die Temperaturverteilung auf beiden Seiten einer Glasplatte möglichst homogen ist.

In dem Bereich, in dem die Keimbildung in der Glaskeramik einsetzt, werden Viskositäten im Bereich von η=10¹⁰ bis 10⁹ dPs erreicht. Das Glas wird unter anderem durch die Wärmefreisetzung, die bei der Kristallisation entsteht, während des Keramisierungsprozesses zeitweise sehr weich. Dementsprechend wird die Oberfläche der Unterlage, auf der das zu keramisierende Glas aufliegt, insbesondere auf der Auflageseite des Glases abgebildet. Daher sollte die Oberfläche der Unterlage die Glasoberfläche möglichst nicht beeinflussen. Auch darf die Glasplatte nicht auf der Unterlage haften, da es sonst beim Ablösen, sowie aufgrund unterschiedlicher Ausdehnungskoeffizienten von Glas und Unterlage beim Erwärmen und Abkühlen zu Verletzungen der Glasoberfläche kommen kann. Diese Verletzungen sind insbesondere für die Stabilität des keramisierten Produkts schädlich.

Als Unterlagen werden vielfach geschliffene Keramikplatten mit glatter Oberfläche verwendet. Auch werden Pulver als Trennmittel zwischen Unterlage und Glasplatte gestreut um ein Anhaften zu verhindern und so ebenfalls dafür sorgen sollen, daß es nicht zu Verletzungen der Glasoberfläche kommt. Sowohl die geschliffenen Keramikplatten, als auch die Pulver können jedoch im allgemeinen Verletzungen der Glasoberfläche nicht völlig vermeiden. Vorteilhaft ist bei derartigen Unterlagen andererseits, daß sie eine große Wärmekapazität aufweisen und so auf der Auflagefläche der Glasplatte für eine sehr gleichmäßige Temperaturverteilung sorgen und Temperaturschwankungen ausgleichen. Die große Wärmekapazität ist auch nachteilig, wenn während des Keramisierungsprozesses Keramisierungsaprogramme mit schnellen Temperaturwechseln durchgeführt werden sollen. Zudem muß die Unterlagsplatte während des Keramisierungsprozesses für jede Glasplatte mit aufgeheizt werden, was zu beträchtlichen Energieverlusten führt.

In der GB 1383202 wird ein Verfahren zur kontaktlosen Lagerung von Glaskeramiken während der Keramisierung offenbart. Dazu wird als Unterlage eine perforierte Platte verwendet, durch die Gas strömt, wodurch sich zwischen Unterlage und Glasplatte ein Gaspolster bildet. Das durch die perforierte Unterlage geleitete Gas strömt dabei zwischen Platte und Unterlage zum Rand der Platte, wo es schließlich entweicht. Diese Anordnung führt allerdings dazu, daß nur verhältnismäßig kleine Glasplatten keramisiert werden können. Für große Glasplatten führt die inhomogene Druckverteilung, die im Gaspolster unter der Glasplatte entsteht, zu einer vielfach unakzeptablen Verwölbung der Platte.

In der DE 10045479 wird ein Verfahren zum kontaktlosen Lagern und Transportieren von Flachglas beschrieben, bei welchem die Lagerung ebenfalls auf einem Gaspolster erfolgt Die Unterlage weist dazu einen segmentförmigen Aufbau auf, bei welchem das Gas durch Öffnungen in den Segmenten zugeführt wird und durch die Zwischenräume zwischen den Segmenten wieder entweichen kann. Die Temperaturverteilung über die Glasplatte ist bei einem segmentförmigen System jedoch schwierig zu regeln. Die. Segmente müssen, um eine gute Temperaturhomogenität zu erreichen, sehr nahe zueinander angeordnet sein. Dann kann sich jedoch wieder ein Staudruck bilden, der sich auf die Planität der Glasplatte auswirken kann.

Es ist außerdem aus der US 4,059,426 bekannt, zum Vorspannen von Glas Anordungen zu verwenden, bei denen ein vorzuspannendes Flachglas ebenfalls auf einem Gasfilm gelagert und transportiert wird. Dabei wird eine Membran als Unterlage verwendet, die eine Zu- und Abluftperforation aufweist. Die Abluftkanäle gehen dabei durch die Membran hindurch, so daß die Abluft auf der gegenüberliegenden Seite der Auflagefläche für das Flachglas austritt. Beim Vorspannen werden Viskositäten im Bereich von η = 10¹² bis 10¹¹ dPs erreicht. Die Anforderungen an die Homogenität der Druckverteilung sind daher verglichen mit der Keramisierung bei wesentlich niedrigeren Viskositäten geringer.

Die US 5,078,775 beschreibt eine Gaskissen-Unterlage mit einer Membran, deren Oberseite schlitzförmige Gaszuführungs- und Gasauslassöffnungen aufweist. Die Gasauslassöffnungen stehen mit Gasauslass-Kammern in der Membran in Verbindung. Die Gaszuführungs-Öffnungen sind über Sammelschächte mit der Unterseite der Membran verbunden. An der Unterseite der Membran wird komprimiertes. Gas zugeführt, welches durch die Sammelschächte und die Gaszuführungs-Öffnungen zur Oberseite strömt und dort ein Gaskissen erzeugt, auf welchem dann eine Glasplatte gelagert werden kann. Bei einer derartigen Anordnung, bei welcher das zugeführte Gas senkrecht zur Oberseite zugeführt wird, kommt das Gas jedoch nur vergleichsweise kurz mit den Wandungen der Sammelbehälter in Kontakt, so daß kein vollständiger Wärmeaustausch stattfinden und das Gas daher mit einer Temperatur in das Gaskissen einströmen kann, welche sich von der Temperatur der Membran und insbesondere der Temperatur des aufliegenden Glases unterscheiden kann.

Die US 6,781,684 B1 beschreibt eine Membran zum Lagern von Flachglasscheiben. Die Membran weist nach unten geschlossene Überdruck- und Unterdruck-Zellen mit Öffnungen auf, durch welche Gas aus-, beziehungsweise einströmt. Die Membran dient zur Lagerung des Glases für die optische Überprüfung auf Glasfehler.

Aus der US 3,526,491 A ist eine Vorrichtung zum Befördern und Formen von Glas auf einem Fluidpolster bekannt. Dazu wird Gas aus einer unter der Unterlage vorhandenen Kammer durch Kanäle dem Fluidpolster zugeführt. Die Unterlage weist weiterhin nach Kammern auf, über welche das Gas aus dem Fluidpolster wieder abgeführt wird.

Der Erfindung liegt die Aufgabe zugrunde, für das kontaktlose Transportieren und/oder Lagern von Glas oder Glaskeramik eine Lagerung auf einem Gaskissen mit einer besonders homogenen Druck- und Temperaturverteilung bereitzustellen.

Diese Aufgabe wird bereits in höchst überraschend einfacher Weise durch eine Vorrichtung gemäß Anspruch 1, sowie ein Verfahren gemäß Anspruch 25 gelöst Vorteilhafte Weiterbildungen sind Gegenstand der Unteransprüche.

Eine erfindungsgemäße Vorrichtung zum Transportieren und/oder Lagern von Glaskeramik oder Glas umfaßt dementsprechend zumindest eine Membran als Unterlage, die zumindest eine zusammenhängenden Auflagefläche, zumindest eine Gaszufuhrkammer und zumindest eine Gasabfuhrkammer umfaßt, wobei die Gaszufuhrkammer und die Gasabfuhrkammer eine gasdurchlässige Verbindung zur Auflagefläche der Membran aufweisen.

Demgemäß sieht das erfindungsgemäße Verfahren zum Transport und Lagerung von Glas und Glaskeramik, welches insbesondere mittels einer erfindungsgemäßen Vorrichtung durchgeführt werden kann, vor, das Glas oder die Glaskeramik auf einem über einer zusammenhängenden Auflagefläche einer Membran erzeugten Gaskissen aufliegend zu lagern, wobei Levitationsgas dem Gaskissen über zumindest eine in der Membran angeordnete, mit der Auflagefläche durch eine gasleitende Verbindung verbundene Gaszufuhrkammer zugeführt wird, und wobei Levitationsgas des Gaskissens über zumindest eine in der Membran angeordnete, mit der Auflagefläche durch eine gasleitende Verbindung verbundene Gasabfuhrkammer zumindest teilweise wieder abgeführt wird. Vorzugsweise sind die Kammern und die gasdurchlässigen Verbindungen dabei außerdem so dimensioniert, daß in den Kammern entlang der Gasflußrichtung kein Druckabfall entsteht, beziehungsweise ein nahezu homogener Druck herrscht.

Im Unterschied zu der in der US 5078775 offenbarten Vorrichtung, bei welcher die Gaszuführung über Sammelschächte durch die Membran erfolgt, wird erfindungsgemäß also auch das Gas, welches dem Gaskissen zugeführt wird, durch eine oder mehrere in der Membran angeordnete Kammern geleitet, bevor es aus der Membran austritt. Auf diese Weise wird in Verbindung mit der oder den Gasabfuhrkammern nicht nur eine besonders homogene Druckverteilung, sondern auch ein guter Temperaturausgleich erreicht. Durch die Verweilzeit des Gases in der Gaszufuhrkammer wird dessen Temperatur der Temperatur der Membran und der gelagerten Glas- oder Glaskeramikplatte besser angeglichen. Diese erfindungsgemäße Anordnung und Verfahrensweise zum Lagern des Glases oder der Glaskeramik hilft, eine sehr gleichmäßige Temperaturverteilung entlang der gelagerten Platte zu erreichen. Dies führt in überraschend einfacher Weise auch zu einer erhöhten Festigkeit von Glaskeramik-Platten, die während der Keramisierung erfindungsgemäß gelagert werden.

Für einen effektiven Wärmeübertrag zwischen dem aus der Membran ausströmenden und dem in diese hineinströmenden Levitationsgas ist vorteilhaft vorgesehen, daß die zumindest eine Gaszufuhrkammer und zumindest eine Gasabfuhrkammer geschlossene Kanäle umfassen, welche sich in Richtung entlang der Auflagefläche im Inneren der Membran erstrecken. Unter einem geschlossenen Kanal ist demgemäß ein Kanal zu verstehen, welcher nach Art einer Röhre von einer Wandung begrenzt wird. Insbesondere können dabei die Kanäle gegenüber der Bodenfläche der Membran, die der Auflagefläche gegenüberliegt; geschlossen oder zumindest teilweise geschlossen ausgeführt, beziehungsweise nach unten hin zumindest teilweise durch eine Wandung begrenzt sein. Mit einem geschlossenen Kanal ist im Sinne der Erfindung jedoch kein vollständig abgeschlossener Hohlraum gemeint, da für die Zufuhr und Abfuhr aus dem Kammern, beziehungsweise den Kanälen dieser Ausführungsform jeweils zumindest eine Einlassöffnung für die Gaszufuhrkammer und eine Auslassöffnung für die Gasabfuhrkammer vorgesehen sind.

Dabei können vorteilhaft die Gaszufuhrkammer eine Gaseinlassöffnung und die Gasabfuhrkammer eine Gasauslassöffnung aufweisen, die so angeordnet sind, daß die Gasflußrichtung innerhalb der Gaszufuhrkammer und Gasabfuhrkammer quer zur Normalen der Auflagefläche, insbesondere auch entlang der Auflagefläche verläuft. Strömt das Levitationsgas in der Gaszufuhrkammer und der Gasabfuhrkammer in der Membran quer zur Normalen der Auflagefläche, insbesondere in Richtung entlang der Auflagefläche, so kann auch in einer dünnen Membran ein langer Strömungspfad des Gases in den Kammern und damit einhergehend auch ein effektiver Wärmeübertrag an die Kammerwandungen erreicht werden.
Gemäß der Erfindung wird das Levitationsgas in die Gaszufuhrkammer durch zumindest eine gasdurchlässige Verbindung zur Unterseite der Membran zugeführt. Dann kann eine unter den Gasabfuhr- und Gaszufuhrkammern angeordnete Vorkammer, vorzugsweise mit keramischer Wandung vorgesehen werden, welche für die Zuführung von Gas in die Gaszufuhrkammer über zumindest eine gasdurchlässige Verbindung mit der Gaszufuhkammer verbunden ist. Denkbar wäre dabei auch, daß die Vorkammer selbst Bestandteil der Membran ist, beziehungsweise eine einstückige Membran mit zumindest einer Vorkammer, Gasabfuhr- und Gaszufuhrkammern verwendet wird. In jedem Fall ist die Gaszufuhrkammer nach unten hin zumindest teilweise abgeschlossen, wobei das Levitationsgas in die Gaszufuhrkammer durch eine nach unten gerichtete gasdurchlässige Verbindung in der Membran in die Gaszufuhrkammer eingeführt wird. Zwar wird auch beispielsweise bei der aus der US 5,078,775 bekannten Gaskissen-Unterlage das Gas von unten her zugeführt, allerdings weist diese Membran keine geschlossenen, oder nach unten hin zumindest teilweise geschlossenen Kammern oder Kanäle für dei Gaszufuhr auf. Vielmehr sind die Kanäle vollständig nach unten hin geöffnet. Im Unterschied dazu wird durch die Gaszufuhrkammer mit einer gasdurchlässigen Verbindung, insbesondere in Form von Kanälen mit geringerem Querschnitt als die Gaszufuhrkammer erreicht, daß das Gas länger in der Gaszufuhrkammer verweilt, bevor es über die weitere gasdurchlässige Verbindung aus der Auflagefläche austritt. Damit wird auch bei dieser Ausführungsform der Erfindung ein verbesserter Wärmeaustausch mit der Membran und damit eine besonders gute Temperaturhomogenität im Gaskissen erreicht. Insbesondere kann mit einer erfindungsgemäßen Vorrichtung mittels der Membran mit Kammern für Gaszufuhr und Gasabfuhr die Temperatur des Levitationspolsters mit einem Temperaturgradienten in Richtung entlang der Auflagefläche von kleiner 10 °C, bevorzugt kleiner 5 °C gehalten werden. Ebenfalls denkbar, allerdings etwas aufwendiger ist auch eine umgekehrte Konfiguration, bei welcher nicht die Gaszufuhrkammern, sondern die Gasabfuhrkammern entsprechend an eine Vorkammer mittels einer nach unten gerichteten gasdurchlässigen Verbindung angeschlossen sind, so daß das Gas aus dem Levitationskissen über die Gasabfuhrkammern in die Vorkammer gelangt und dort abgeführt wird.

Bevorzugt sind die Kammern so ausgebildet, daß bei dem vorgesehenen Gasdruck in den Kammern der Druckabfall höchstens 0,5 mBar beträgt. Wenn das Levitationsgas beim Durchströmen der Gaszufuhrkammer und/oder der Gasabfuhrkammer einen Druckabfall von höchstens 0,5 mBar erfährt, kann auch im Gaskissen eine besonders homogene Druckverteilungen erzielt werden.

Erfindungsgemäß wird, indem die Gaszufuhrkammer mit Gas beaufschlagt wird, ein Gaskissen zwischen der Auflagefläche und einem darauf gelagerten Körper aus Glas oder Glaskeramik erzeugt, auf welchem der Körper dann kontaktfrei zur Membran in Schwebe gehalten werden kann, wobei durch die gasleitende Verbindung der zusammenhängenden.Auflagefläche zu der zumindest einen Gasabfuhrkammer ein Druckausgleich im Gaskissen hergestellt wird. Mit der Erfindung wird so eine besonders homogene Druckverteilung erreicht. Damit werden Verformungen des gelagerten Materials insbesondere im heißen Zustand vermieden. Aufgrund dieser Eigenschaften der erfindungsgemäßen Vorrichtung und des erfindungsgemäßen Verfahrens ist dies besonders auch zur Keramisierung von Gläsern geeignet. Gemäß einer Ausführungsform der Erfindung umfaßt die Vorrichtung im besonderen daher einen Keramisierungsofen Entsprechend umfaßt eine Ausführungsform des Verfahrens auch das Keramisieren von auf dem Gaskissen gelagerten Material, insbesondere das Keramisieren von Glas. Ein Verfahren zur Keramisierung von Glas, welches mit der erfindungsgemäßen Vorrichtung ausgeführt werden kann, sowie mit der erfindungsgemäßen Vorrichtung oder dem hier beschriebenen, erfindungsgemäßen Verfahren herstellbare glaskeramische Artikel werden auch in der am gleichen Tag wie die vorliegende Erfindung angemeldeten deutschen Anmeldung der Anmelderin mit dem Titel "Verfahren zur Herstellung von Glas- oder Glaskeramik und insbesondere Glas- oder Glaskeramik-Artikel " beschrieben, deren Offenbarungsgehalt vollumfänglich auch zum Gegenstand der vorliegenden Erfindung gemacht wird.

Da mit der erfindungsgemäßen Vorrichtung und dem erfindungsgemäßen Verfahren neben einer Lagerung auch ein berührungsloser Transport insbesondere auch von stark erweichtem Material ermöglicht wird, ist die Erfindung auch für einen kontinuierlichen Produktionsablauf geeignet, bei welchem beispielsweise ein kontinuierliches Glas- oder Glaskeramikband verarbeitet wird. Demgemäß umfaßt eine Ausführungsform der erfindungsgemäßen Vorrichtung einen Durchlaufofen. Entsprechend sieht auch eine Variante des erfindungsgemäßen Verfahrens das Transportieren eines kontinuierlichen Glas- oder Glaskeramikbandes oder Strangs vor, wobei das Band oder der Strang an zumindest einem Abschnitt des Transportweges auf einem erfindungsgemäß erzeugten Gaskissen aufliegt.

Durch die in der Membran angeordneten Kammern wird zusätzlich ein Temperaturausgleich zwischen der Temperatur der Membran und dem Levitationsgas geschaffen, da sich das Gas in der Kammer vor dem Autritt durch die leitende Verbindung zur Auflagefläche der Membrantemperatur anpassen kann.

Die Gaszufuhr und Gasabfuhr für das Gaskissen kann beispielsweise durch Einstellen eines geeigneten Druckgefälle zwischen Gaszufuhr- und Gasabfuhrkammer eingestellt werden.

Für das Keramisieren von Glas hat es sich als vorteilhaft für die mechanischen Eigenschaften und die Temperaturstabilität des fertig keramisierten Materials erwiesen, wenn das Glas zunächst auf eine Temperatur T1 in einem Bereich von 650 bis 800 °C aufgeheizt und dann auf dieser Temperatur für eine Dauer von 0,5 bis 4 Stunden gehalten wird. Anschließend kann dann das Glas weiter auf eine Temperatur T2 in einem Bereich von 850 bis-950°C erhitzt und auf dieser Temperatur T2 für eine Dauer von etwa 5 bis 50 Minuten gehalten werden. Schließlich kann das nun keramisierte Material auf Raumtemperatur abgetempert werden. Dabei dient das Halten auf einer Temperatur T1 der Keimbildung von Kristallisationskeimem und das Halten auf der Temperatur T2 dem Kristallwachstum. Besonders vorteilhaft können dabei diese Verfahrensschritte durchgeführt werden, während das Material auf dem Gaskissen lagert.

Gemäß einer Ausführungsform der Erfindung ist die Membran aus extrudiertem Material hergestellt. Extrudierte Membranen lassen sich in einfacher Weise in hoher Qualität mit in der Membran integrierter, extrudierter Gaszufuhrund Gasabfuhrkammer herstellen. Bevorzugt wird als Material für die Membran Cordierit-Keramik oder gesintertes Siliziumoxid , beziehungsweise Siliziumoxid-Keramik verwendet.

Ebenso kann eine solche Membran mit Gaszufuhrkammer und Gasabfuhrkammer aber auch zwei geeignet ausgeformte und aufeinandergesetzte Halbschalen umfassen. Diese können beispielsweise gußgeformt oder ebenfalls extrudiert sein. Als Materialien können dabei ebenfalls Cordierit-Keramik oder gesintertes Siliziumoxid verwendet werden.

Bei einer weiteren bevorzugten Ausführungsform der erfindungsgemäßen Vorrichtung umfaßt die gasdurchlässige Verbindung Kanäle, welche mit der Auflagefläche verbunden sind, wobei die Kanäle insbesondere auch senkrecht zu einer Transportrichtung für das Glas oder die Glaskeramik versetzt angeordnet sein können.

Das Gas, welches in die extrudierten Kammern eingeführt wird, erfährt bei geeigneter Ausführung der Kammern in der Gaszufuhrkammer zunächst einen Temperaturausgleich, bevor es durch die gasleitende Verbindung zur Auflagefläche gelangt. Auf diese Weise wird außerdem neben einer homogenen Druckverteilung auch eine sehr homogene Temperaturverteilung im Gaskissen und damit an der Auflageseite des Glases oder der Glaskeramik geschaffen.

Die zumindest eine Gaszufuhr- und die zumindest eine Gasabfuhrkammer können vorteilhaft eine entlang einer Richtung, im besonderen entlang der Extrusionsrichtung langgestreckte Form aufweisen und entlang dieser Richtung parallel zueinander verlaufen. Durch diese langgestreckte Form der Kammern wird ein Temperaturausgleich zusätzlich begünstigt. Eine derartige Form der Kammern kann insbesondere auch leicht in einer durch Extrusion hergestellten Membran erzeugt werden.

Bei dieser Anordung ist es vorteilhaft, wenn die gasdurchlässige Verbindung Verbindungskanäle umfaßt, welche mit der Auflagefläche verbunden sind und welche in einer oder mehrerer Reihen entlang der Richtung angeordnet sind, entlang welcher sich die Kammern langgestreckt sind. Mehrere parallel verlaufende Reihen von Kanälen sind dabei insbesondere für die Gaszuführung geeignet. Um den Aufwand für eine Perforierung zu minimieren, kann beispielsweise für die Gasabfuhr eine einzelne Reihe von Verbindungskanälen zu einer Gasabfuhrkammer vorgesehen sein.

Ferner ist bei langgestreckten Kammern vorteilhaft, wenn die Membran so angeordnet ist, daß die Richtung, entlang welcher die Kammern eine langgestreckte Form aufweisen, im wesentlichen senkrecht zur Transportrichtung für Glas oder Glaskeramik verläuft.

Vorteilhaft kann die Membran einer erfindungsgemäßen Vorrichtung, insbesondere um auf einfache Weise eine möglichst homogene Druck- und Temperaturverteilung zu erreichen, eine Mehrzahl von Gaszufuhrkammern und eine Mehrzahl von Gasabfuhrkammern aufweisen, die entlang einer Richtung abwechselnd angeordnet sind. Bevorzugt wird bei dieser Ausführungsform die Membran dabei so angeordnet, daß die Kammern entlang der Transportrichtung abwechselnd angeordnet sind.

Verbleibende Inhomogenitäten der Druck- und/oder Temperaturverteilung können auch vorteilhaft zeitlich weitgehend durch eine Bewegung des Substrats ausgemittelt werden. Dies kann auch in einfacher Weise mit einem Reversierbetrieb erreicht werden, bei welchem das Glas oder die Glaskeramik während des Aufliegens auf dem Gaskissen entlang zumindest einer Richtung entlang der Oberfläche der Auflagefläche, insbesondere während einer Keramisierung hin und her bewegt wird.

Bei der oben beschriebenen Ausführungsform der Erfindung, bei welcher in der Membran die Gaszufuhrkammern und Gasabfuhrkammern entlang einer Richtung abwechselnd angeordnet sind, ist es auch besonders vorteilhaft, wenn das Glas oder die Glaskeramik entlang dieser Richtung mit einer Auslenkung hin und her bewegt wird, die wenigstens so groß ist, wie die Periode der abwechselnden Anordnung. Damit wird erreicht, daß im wesentlichen jede Stelle auf dem Glas oder der Glaskeramik sowohl Gaszufuhr-, als auch Gasabfuhrbereiche überstreicht. Durch das periodische Hinund Herbewegen wird so der auf diese Stelle wirkende Druck zeitlich ausgemittelt und gleicht sich dem mittleren Druck des Gaskissens an.

Wenn die Gaszufuhrkammern und Gasabfuhrkammern Verbindungskanäle zur Auflagefläche aufweisen, die senkrecht zu der Richtung, entlang welcher die Kammern abwechselnd angeordnet sind, versetzt angeordnet sind, so kann das Hin- und Herbewegen mit einer Auslenkung erfolgen, die mindestens so groß ist, wie die Versetzungsperiode der Verbindungskanäle entlang dieser Richtung. Auf diese Weise wird eine besonders gute zeitliche Ausmittelung von Inhomogenitäten des Druck- und/oder Temperaturprofils erreicht.
Gemäß einer weiteren Ausführungsform der Vorrichtung kann die gasdurchlässige Verbindung ein poröses Material umfassen. Beispielsweise kann dazu die extrudierte Membran auch vollständig aus porösem Material, wie etwa poröser Quarzal-Keramik hergestellt sein. Die der Auflagefläche abgewandte Seite der Membran kann dann mit einer abdichtenden Beschichtung oder Auflage versehen sein, so daß das Gas nur zwischen den Kammern und der Auflagefläche strömt.

Vorteilhaft kann die erfindungsgemäße Vorrichtung auch eine Gasreinigungsvorrichtung umfassen, mit welcher das Levitationsgas gereinigt wird, um den Niederschlag von Verschmutzungen zu vermeiden.

Bei einer Ausführungsform der erfindungsgemäßen Vorrichtung ist vorgesehen, daß die Vorrichtung zumindest ein mechanisches Drehlager zur Lagerung und zum Transport des Glaskeramik- oder Glasmaterials aufweist. Ein solches Drehlager kann beispielsweise Kugeln oder Rollen umfassen, auf denen die Glasplatte gelagert ist.

Auf dem Drehlager kann das Glas- oder Glaskeramikmaterial entlang der Auflagefläche der Membran verschoben werden, ohne, daß es zu einer reibenden Berührung mit der Auflagefläche kommt, die Kratzer und Verletzungen im Material hinterlassen könnte. Dies ist unter anderem dann vorteilhaft, wenn die Gaszuführung für das Gaskissen während des Aufschiebens des Materials auf die Auflagefläche oder des Weitertransportierens nicht betrieben wird oder zu betrieben werden braucht. Eine solche Ausführungsform der erfindungsgemäßen Vorrichtung ist besonders auch dann von Vorteil, wenn stark gewölbte Gläser oder Glaskeramiken transportiert werden sollen. Für die Levitation solcher Körper sind im Vergleich zur levitierenden Lagerung und Bewegung von Körpern mit ebenen Flächen, wie etwa gefloateten Glasplatten große Gasmengen erforderlich. Hier kann dann das Gaskissen beispielsweise nur für die Lagerung während einer Keramisierung eingesetzt werden, um die Wirtschaftlichkeit des Produktionsablaufs zu erhöhen. Auch als Notlauf-Einrichtung, beispielsweise bei Ausfall der Gaszufuhr ist ein solches Drehlager vorteilhaft.

Das Drehlager kann mechanisch, etwa seinerseits mit geeigneten Kugellagern gelagert sein. Insbesondere ist aber auch ein gasgelagertes Drehlager von Vorteil. Dieses kann beispielsweise ebenfalls wie die Auflagefläche über Verbindungskanäle mit einer Gaszufuhrkammer verbunden sein, so daß die Rolle oder Kugel des Lagers auf einem Gaskissen gelagert wird.

Wird das Glas oder die Glaskeramik durch den Gasfilm, beziehungsweise das Gaskissen gelagert, ist eine Auflage auf dem Drehlager nicht mehr notwendig oder sogar unerwünscht, weil dies eine homogene Kräfteverteilung auf der Auflageseite des Glases oder der Glaskeramik stört.

Daher ist es von Vorteil, wenn das Drehlager in die Auflagefläche eingesenkt ist und so nicht vollständig über die Auflagefläche hinausragt. Bei einer Ausführungsform der Vorrichtung ragt daher das Drehlager höchstens um die Hälfte der Schwebehöhe des Glases oder der Glaskeramik aus der Auflagefläche hinaus.

Die erfindungsgemäße Vorrichtung kann vorteilhaft zur Verarbeitung von Glas oder Glaskeramik eine Heizvorrichtung umfassen. Insbesondere für die Verarbeitung hochwertiger Produkte aus Glas oder Glaskeramik ist dabei eine elektrische Heizung, wie beispielsweise ein oder mehrere Infrarotstrahler von Vorteil, da dadurch Verunreinigungen, die beispielsweise als Verbrennunsprodukte beim Einsatz fossiler Brenner entstehen können, vermieden werden.

Vorteilhaft kann außerdem eine erste Gasverteilungskammer mit der Gaszufuhrkammer an einer ersten Kante der Membran verbunden und eine zweite Gasverteilungskammer an einer zweiten, der ersten Kante gegenüberliegenden Kante der Membran mit der Gasabfuhrkammer verbunden sein. Auf diese Weise erfolgt die Gaszuleitung und die Gasableitung von und zur Membran von gegenüberliegenden Kanten der Membran. Bevorzugt werden dabei jeweils mehrere Kammern von einer Gasverteilungskammer versorgt. Dieser Aufbau ist besonders einfach und platzsparend zu realisieren.

Vorteilhaft ist es ferner, wenn das Levitationsgas zumindest teilweise umgewälzt wird. Dazu kann das Levitationsgas über die Gasabfuhrkammer einer Gasumwälzvorrichtung zugeführt werden, welches das Gas wieder den Gaszufuhrkammern zuführt, von wo es wieder in das Gaskissen gelangt. Auf diese Weise wird ein Kreislauf des Levitationsgases erreicht. Dies ist insbesondere dann vorteilhaft, wenn das Glas oder die Glaskeramik in heißem Zustand, beispielsweise für die Keramisierung auf dem Gaskissen gelagert wird. Das umgewälzte Gas gelangt so bereits aufgeheizt in die Gaszufuhrkammern, so daß die Membran nur wenig durch neu zugeführtes Levitationsgas abkühlt. Dies spart zu einen Energie, zum anderen wird auch die Homogenität der Temperaturverteilung kaum oder gar nicht gestört.

Gemäß einer Ausführungsform des erfindungsgemäßen Verfahrens können auch Gläser oder Glaskeramiken mit gebogener oder gewölbter Oberfläche hergestellt werden. Dazu kann die Membran eine gewölbte Auflagefläche aufweisen. Ein Glas- oder Glaskeramik-Körper kann dann in erwärmtem Zustand durch Schwerkraftsenken über der Membran gewölbt werden. Vorteilhaft ist es dabei insbesondere, wenn während des Wölbungsvorgangs Levitationsgas zugeführt wird, sodaß das Wölben berührungsfrei erfolgen kann. Membranen mit gewölbter Auflagefläche können aber auch vorteilhaft für den levitierenden Transport und/oder die levitierende Lagerung bereits gewölbter Gläser oder Glaskeramiken auf einem Gaskissen eingesetzt werden.

Die Erfindung wird nachfolgend unter Bezugnahme auf die beigefügten Figuren näher beschrieben. Gleiche Bezugszeichen in den Figuren verweisen dabei auf gleiche oder ähnliche Teile.

Es zeigen:
- Fig. 1A: eine Querschnittansicht durch eine Membran einer erfindungsgemäßen Vorrichtung,
- Fib. 1B: eine perspektivische Ansicht der in Fig. 1B dargestellten Membran,
- Fig. 1C: eine Querschnittansicht einer Ausführungsform einer Membran mit daran angeschlossenem Umluftsystem,
- Fig. 1D: eine Querschnittansicht einer weiteren Ausführungsform einer Membran mit daran angeschlossenen Gasverteilungskammern,
- Fig. 1E: eine Ausführungsform der Erfindung mit einer unter der Membran angeordneten Vorkammer für die Zuführung des Levitationsgases zur Membran,
- Fig. 2: eine Aufsicht auf eine Ausführungsform einer Membran,
- Fig. 3: eine Querschnittansicht durch eine weitere Ausführungsform einer Membran einer erfindungsgemäßen Vorrichtung mit gasgelagerten Drehlagern,
- Fig. 4: eine Ausführungsform einer Membran mit zwei zusammengesetzten Halbschalen,
- Fig. 5: eine Ausführungsform einer Membran mit gewölbter Oberfläche,
- Fig. 6A und 6B: anhand schematischer Querschnittansichten einer Ausführungsform und
- Fig. 6C und 6D: anhand schematischer Querschnittansichten einer weiteren Ausführungsform einer erfindungsgemäßen Vorrichtung die Verfahrensschritte zur Herstellung eines gewölbten glaskeramischen Artikels,und
- Fig. 7: eine Ausführungsform einer erfindungsgemäßen Vorrichtung zur kontinuierlichen Keramisierung eines Glasbandes.

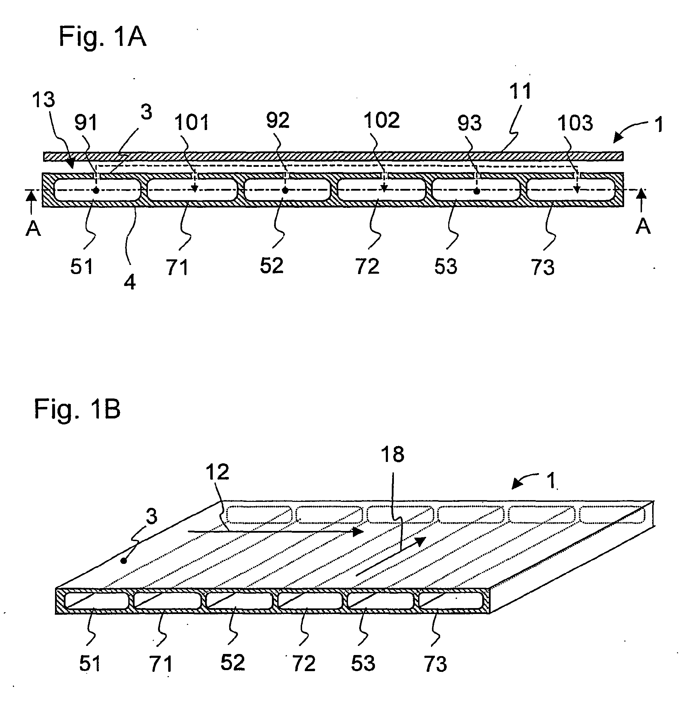

In Fig. 1A ist eine Querschnittansicht einer als Ganzes mit 1 bezeichneten Membran dargestellt. Die Membran ist vorzugsweise durch Extrudieren eines geeigneten Materials, wie etwa einer temperaturfesten Keramik hergestellt. Als Keramik ist unter anderem Cordierit oder gesintertes Siliziumoxid geeignet.

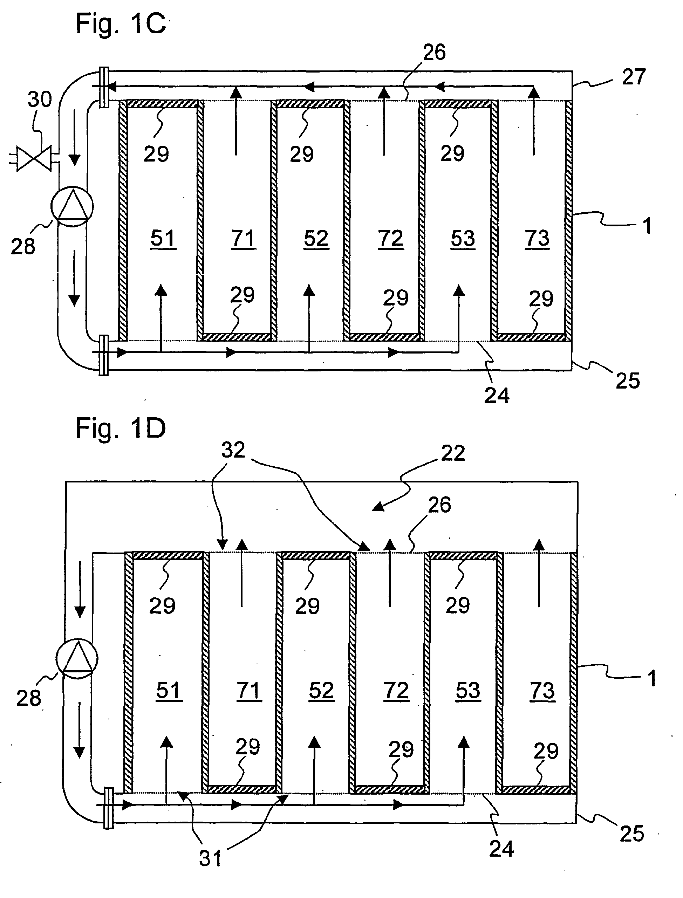

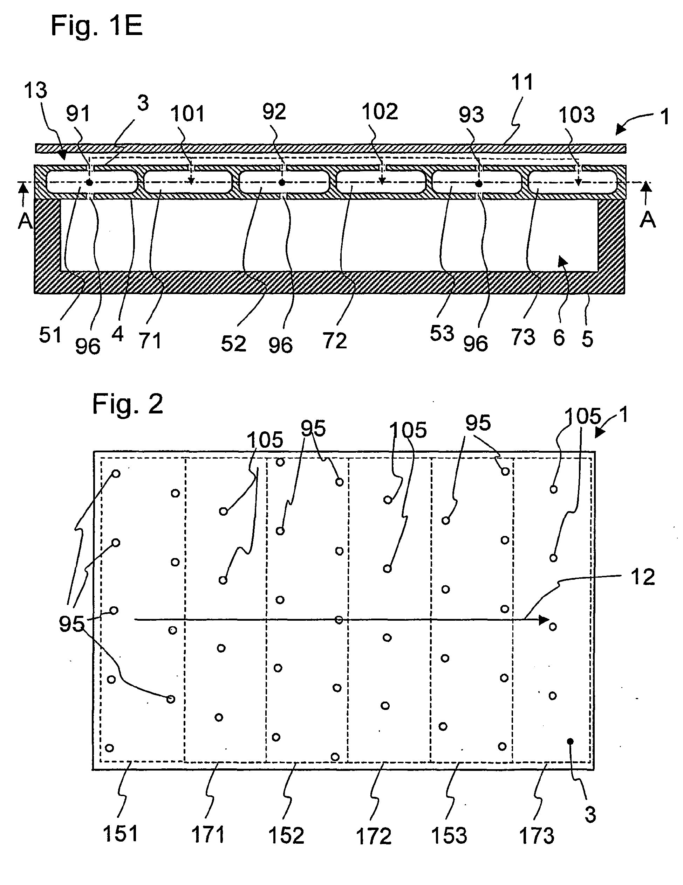

Die Membran 1 weist eine Anzahl von Kammern 51, 52, 53, 71, 72, 73 auf, die unterhalb der auf einer Seite der Membran angeordneten zusammenhängenden Auflagefläche 3 innerhalb der Membran angeordnet sind. Dabei werden die Kammern 51, 52, 53 in einer erfindungsgemäßen Vorrichtung als Gaszufuhrkammern und die Kammern 71, 72, 73 als Gasabführkammern für das Levitationsgas des Gaskissens verwendet, welches sich zwischen einem darauf befindlichen Glas oder einer Glaskeramik und der zusammenhängenden Auflagefläche 3 der Membran durch Zuführen des Levitationsgases über die Kammern 51, 52, 53 ausbildet. Fig. 1A zeigt zur Verdeutlichung einen sich oberhalb des Oberflächenbereichs 3 in Levitation auf einem Gaskissen oder Gasfilm 13 befindlichen Glas- oder Glaskeramikkörper 11 in Form einer beidseitig ebenen Platte. Wird die Membran durch Extrudieren hergestellt, so liegt die Extrusionsrichtung vorzugsweise in Richtung senkrecht zur Papierebene in Fig. 1. Die Gaszufuhrkammern 51, 52, 53 und die Gasabfuhrkammern 71, 73 weisen dadurch eine entlang dieser Richtung langgestreckte Form auf und verlaufen entlang dieser Richtung parallel zueinander. Insbesondere sind die Kammern als geschlossene Kanäle ausgebildet, welche sich in Richtung entlang der Auflagefläche im Inneren der Membran 3 erstrecken. Die Kanäle sind dabei auch gegenüber der Bodenfläche 4 der Membran 1, die der Auflagefläche 3 gegenüberliegt, geschlossen oder zumindest teilweise geschlossen, so daß eine Wärmebarriere zur Unterseite der Membran 1 vorhanden ist.

Die Anordnung der Kammern ist nochmals anhand der in Fig. 1B dargestellten, perspektivischen Ansicht verdeutlicht. Die Extrusionsrichtung 18 ist durch einen Pfeil angedeutet. Durch diese Form und Anordnung der Kammern läßt sich ein besonders guter Ausgleich der Gastemperaturen schaffen, da zugeführtes und abgeführtes Gas in den Kammern parallel zueinander in langgestreckten kanalförmigen Kammern mit großer Oberfläche strömen. Vorzugsweise sind die Kammern außerdem entlang einer Richtung senkrecht zur Transportrichtung 12 langgestreckt, so daß sie quer zu dieser Transportrichtung verlaufen. Auf diese Weise überquert ein Ort auf der Oberfläche eines Glas- oder Glaskeramik-Körpers abwechselnd Gaszufuhr- und Gasabführungskammern. Es wird somit vermieden, daß sich beim Transport bestimmte Stellen auf der Oberfläche eines zu transportierenden Körpers nur oder überwiegend über Gaszufuhr- oder Gasabfuhrkammern befindet. Im Falle einer extrudierten Membran liegt also vorzugsweise die Extrusionsrichtung 18 senkrecht zur Transportrichtung. Außerdem sind die Gaszufuhrkammern 51 - 53 und die Gasabfuhrkammern 71 - 73 entlang der Transportrichtung abwechselnd angeordnet.

Das Glas oder die Glaskeramik 11 kann während des Aufliegens auf dem Gaskissen 13 auch entlang einer Richtung entlang der Oberfläche der Auflagefläche 3 bewegt werden. Vorzugsweise wird dazu die Richtung verwendet, entlang welcher die Kammern abwechselnd angeordnet sind, also bei der in den Fig. 1A und 1B gezeigten Ausführungsform entlang der Transportrichtung. Ein solcher Reversierbetrieb ist insbesondere während einer Keramisierung vorteilhaft, um eine hohe Planität des fertig keramisierten Körpers zu erreichen, da verbleibende Druck- oder Temperaturinhomogenitäten zeitlich ausgemittelt werden. Besonders bevorzugt wird das Glas oder die Glaskeramik 11 entlang dieser Richtung mit einer Auslenkung hin und her bewegt, die wenigstens so groß ist, wie die Periode der abwechselnden Anordnung der Gazufuhr- und Gasabfuhrkammern 51 - 53, beziehungsweise 71 bis 73.

Mit der abwechselnden Anordnung der Kammern wird erreicht, daß die Gaszufuhrbereiche und Gasabfuhrbereiche auf der Auflagefläche klein bleiben und somit eine besonders homogene Druckverteilung erreicht wird, da lange Strömungswege des Levitationsgases im Gaskissen entlang der Auflagefläche 3 vermieden werden.

Fig. 1C zeigt eine Querschnittansicht einer Ausführungsform einer Membran mit einem Umluftsystem, welches an die Membran 1 angeschlossene Gasverteilungskammern 25, 27 umfaßt, wobei der Querschnitt durch die Membran 1 in Aufsicht entlang der Querschnittlinie A-A in Fig. 1A dargestellt ist.

Die Gasverteilungskammern 25 und 27 sind dabei an gegenüberliegenden Kanten 24, beziehungsweise 26 an die Membran angeschlossen. Dabei stehen die Gaszufuhrkammern 51, 52, 53 mit der Gasverteilungskammer 25 und die Gasabfuhrkammern 71, 72, 73 mit der Gasverteilungskammer 27 durch Öffnungen 31, 32 der Kammern an den Membrankanten 24, 26 in Verbindung. Um eine Verbindung der Gasabfuhrkammern 71, 72, 73 mit der ersten Gasverteilungskammer 25 und eine Verbindung der Gaszufuhrkammern 51, 52, 53 mit der zweiten Gasverteilungskammer 2.7 zu verhindern sind in die Öffnungen dieser Kammern in den Membrankanten Verschlußteile 29 eingesetzt. Auf diese Weise gelangt das Levitationsgas von der ersten Gasverteilungskammer 25 über die Membrankante 24 in die Gaszufuhrkammern 51, 52, 53 und aus dem Gaskissen abgeführtes Levitationsgas von den Gasabfuhrkammern 71, 72, 73 über Öffnungen an der gegenüberliegenden Membrankante 26 in die zweite Gasverteilungskammer 27. Aufgrund der Anordnung der als Gaseinlass-, beziehungsweise Gasauslassöffnungen der Kammern 51, 52, 53, 71, 72, 73 dienenden Öffnungen 31, 32, an den Membrankanten wird erreicht, daß die Gasflußrichtung innerhalb der Kammern 51 - 53, 71 - 73 quer zur Normalen der Auflagefläche, insbesondere entlang dieser Fläche verläuft.

Die Auflagefläche 3 ist perforiert und weist als Perforation Gaszufuhrkanäle 91, 92, 93 und Gasabfuhrkanäle 101, 102, 103 als gasleitende Verbindung zwischen den Kammern und der Auflagefläche 3 auf. Die Zufuhr und Abfuhr des Levitationsgases erfolgt über die mit der Auflagefläche 3 und den Kammern 51, 52, 53 und 71, 72, 73 in Verbindung stehenden Gaszufuhrkanälen 91, 92, 93 und Gasabfuhrkanälen 101, 102, 103. Die Gasflußrichtung ist in Fig. 1C durch Pfeile dargestellt. Zwischen den Kammern 51, 52, 53 und 71, 72, 73 wird dazu eine Druckdifferenz erzeugt, wobei in den Gaszufuhrkammern 51, 52, 53 ein höherer Druck als in den Gasabfuhrkammern 71, 72, 73 eingestellt wird.

Beispielsweise kann ein Glas- oder Glaskeramikkörper dann elektrisch beheizt werden, um diesen zu keramisieren oder weiterzuverarbeiten. Durch eine elektrische Bezheizung wird eine Verschmutzung des Glases oder der Glaskeramik weitgehend vermieden.

Mit einem nicht dargestellten Gasreinigungseinrichtung kann das Levitationsgas vor Eintritt in die Gaszufuhrkammern zusätzlich gereinigt werden, so daß dieses beispielsweise im wesentlichen frei von Schwebeteilchen ist, die sich im erweichten Zustand des Ausgangsglaskörpers auf dessen Oberfläche ablagern können.

Mit einer Pumpe 28 als Gasumwälzvorrichtung, die an die Gasverteilungskammern 25 und 27 angeschlossen ist, wird das Levitationsgas außerdem umgewälzt und so entsprechend einem Umlufbetrieb ein Gaskreislauf hergestellt. Das vom Gaskissen in die Gasabfuhrkammern 71 gelangte Levitationsgas wird von der Pumpe angesaugt, und so den Gaszufuhrkammern 51 bis 53 wieder zugeführt, von wo es wieder in das Gaskissen gelangt. Lediglich seitlich zwischen Glas oder Glaskeramik und Auflage entweichendes Gas muß dabei versetzt werden, beilspielsweise, indem auf der Unterdruckseite der Pumpe 28, wie in Fig. 1C gezeigt ist, ein definiertes Leck mittels eines Leckventils 30 bereitgestellt wird. Auf diese Weise wird der in den Kammern der Membran herzustellende Temperaturausgleich auf ein Minimum reduziert, wenn das Gas in heißem Zustand umgewälzt wird. Auch eine Temperaturdifferenz zwischen dem Gaskissen und der Oberfläche des auf dem Gaskissen aufliegenden Materials wird so weiter reduziert.

Mittels der Pumpe wird außerdem eine Druckdifferenz zwischen den Gaszufuhr- und den Gasabfuhrkammern erzeugt, um eine Gasströmung von den Gaszufuhrkammern 51 bis 53 in das Gaskissen und von dort aus in die Gasabfuhrkammern 71 bis 73 zu erzeugen. Innerhalb der Kammern 51 - 53, 71 - 73 kann der Druckunterschied entlang der Gasflußrichtung andererseits möglichst klein gehalten werden. Eine Weiterbildung des erfindungsgemäßen Verfahrens sieht dazu vor, daß das Levitationsgas beim Durchströmen der Gaszufuhrkammer 51 - 53 oder der Gasabfuhrkammer 71 - 73 einen Druckabfall von höchstens 0,5 mBar erfährt. Damit ist ein entlang der Kammern gleichmäßiger Gasfluß aus und in das Gaskissen erreichbar, ohne daß zur Erreichung einer homogenen Druckverteilung etwa die Dimensionierung der Gaszuführungs- und Gasabfuhrkanäle angepaßt werden muss.

In Fig. 1D ist eine weitere Ausführungsform einer Membran 1 mit einer Gasversorgung in Form eines Umluftsystems für das Levitationsgas dargestellt. Im Unterschied zu der anhand von Fig. 1C gezeigten Ausführungsform wird das von der Auflagefläche in die Gasabfuhrkammern 71 bis 73 einströmende Gas nicht über eine Gasverteilungskammer der Pumpe 28 zugeführt, sondern die Gasabfuhrkammern 71 bis 73 sind zu einem schematisch dargestellten Ofenraum 22 hin geöffnet. Im Ofenraum 22 Auch die Auflagefläche 3 ist im Ofenraum angeordnet, wobei das Glas im Ofenraum 22 auf der Membran 1 gelagert wird. Aus dem Ofenraum wird auch das Levitationsgas wieder von der Pumpe angesaugt und dem Gaskissen auf der Auflagefläche 3 über die Gasverteilungskammer 25 und die Gaszuführungskammern 51 - 53 der Membran 1 zugeführt.

In Fig. 1E ist eine Weiterbildung der Erfindung dargestellt, bei welcher das Gas in die Gaszufuhrkammern über eine unter der Membran 1 angeordnete Vorkammer 6 eingeführt wird. Auch bei dieser Weiterbildung der Erfindung sind die Gaszufuhrkammern 51, 52, 53 nach unten hin zumindest teilweise durch eine Wandung der Membran 1 begrenzt. Die Gaszufuhrkammern 51, 52, 53 weisen dabei jeweils nach unten gerichtete gasdurchlässige Verbindungen in Form von Kanälen 96 zur Unterseite oder Bodenfläche 4 für die Zuführung von Gas aus der Vorkammer 6 auf. Die Vorkammer 6 wird durch ein an der Bodenfläche 4 angeschlossenes Vorkammer-Gehäuse 5 gebildet. Das Vorkammergehäuse 5 wird vorzugsweise wie auch die Membran 1 aus keramischem Material gefertigt, um Verunreinigungen des Levitationsgases zu vermeiden.

Mittels einer erfindungsgemäßen Membran, wie sie beispielhaft anhand der Fig. 1A bis 1E beschrieben wurde, wird das Glas oder die Glaskeramik (11) durch das Levitationspolster in einer Höhe von zumindest 750 Mikrometern, vorzugsweise bis höchstens 2 Millimetern oberhalb der Auflagefläche gehalten.
Fig. 2 zeigt eine Aufsicht auf die zusammenhängende Oberfläche einer Ausführungsform einer Levitationsunterlage 1 in Form einer Membran. Der Oberflächenbereich 3 der Levitationsunterlage 1 weist Gaszufuhrbereiche 151; 152, 153, an welchen Levitationsgas für das Gaskissen zugeführt wird und Gasabführbereiche 171, 172, 173 auf, an welchem Gas des Gaskissens zumindest teilweise abgeführt wird. Die Bereiche 151, 152, 153, 171, 172, 173 sind in Fig. 2 durch gestrichelte Linien markiert. Die Gaszufuhr erfolgt über in den Gaszuführbereichen 151, 152, 153 angeordnete Gaszuführkanäle 95 und die Gasabfuhr über in den Gasabführbereichen angeordnete Gasabfuhrkanäle 105. Der Übersichtlichkeit halber sind in Fig. 2 nur einige der Kanäle 95 und 105 bezeichnet. Wie in Fig. 1 dargestellt, sind die Kanäle 95 und 105 mit unter dem Oberflächenbereich 3 angeordneten Kammern verbunden.

Die Kanäle 95 und 105 sind außerdem senkrecht zu der durch einen Pfeil angedeuteten Transportrichtung 12 für das Glas oder die Glaskeramik versetzt angeordnet. Auf diese Weise wird vermieden, daß sich während des levitierenden Transports auf dem Gaskissen bestimmte Stellen eines Glas- oder Glaskeramik-Körpers häufiger über Öffnungen von Kanälen befinden. Dadurch werden noch vorhandene Druckdifferenzen im Druckkissen, die sich besonders in der Umgebung der Kanäle bemerkbar machen, im Verlauf des levitierenden Transports und beim Reversierbetrieb zeitlich ausgemittelt.

Im allgemeinen wird, insbesondere bei einer großen Anzahl vo Kanälen und Kammern entlang der Transportrichtung 12 eine periodische Wiederholung des Musters der Verbindungskanäle auftreten. In diesem Fall kann es für den Reversierbetrieb vorteilhaft sein, wenn das Hin- und Herbewegen des Glases oder der Glaskeramik mit einer Auslenkung erfolgt, die mindestens so groß ist, wie die Versetzungsperiode der Verbindungskanäle 95, 105, beziehungsweise die Wiederholungsperiode des Musters der Verbindungskanäle.

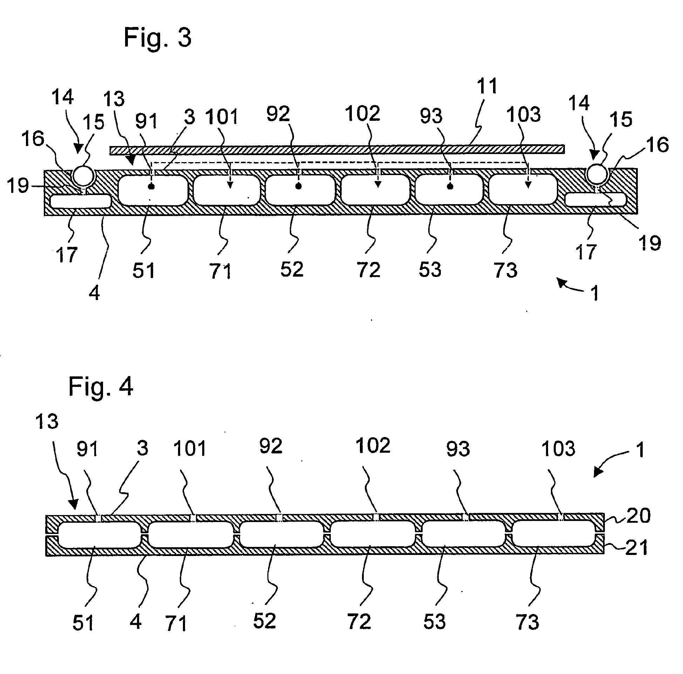

In Fig. 3 ist eine Querschittansicht einer weiteren Ausführungsform einer Membran dargestellt. Die Membran weist im Unterschied zu der in Fig. 1 dargestellten Ausführungsform zwei Drehlager 14 auf. Die Drehlager umfassen jeweils ein Rollenlager 15, welches in die Membran 1 eingesenkt ist. Dazu werden die Rollenlager 15 in Laufbuchsen 16 geführt, die in die Auflagefläche 3 der Membran 1 eingesenkt sind, so daß nur ein Teil der Rollenlager 15 aus der Auflagefläche 3 hervorragt.

Die Drehlager 14 dieser Ausführungsform der Membran 1 sind außerdem gasgelagert. Dazu umfaßt die Membran 1 zusätzliche Gaszufuhrkammern 17, die über Kanäle 19 mit den Laufbuchsen 16 in Verbindung stehen. Werden die Gaszufuhrkammern 17 mit Gas beaufschlagt, so gelangt das Gas durch die Kanäle 19 in die Laufbuchsen 16, wo sich zwischen den Laufbuchsen und den Rollenlagern 15 ein Gaskissen bildet, auf dem die Rollenlager levitieren. Beispielsweise können für den Transport von Glas- oder Glaskeramik-Körpern nur die Kammern 17 mit Gas beaufschlagt werden. Ist ein Körper an seiner vorgesehen Position für die levitierende Lagerung angelangt, kann dann ein Gaskissen über die Gaszufuhrkammern 51 bis 53 und die Gasabfuhrkammern 71 bis 73 zwischen Auflagefläche 3 und dem Körper erzeugt werden. Für den Weitertransport des Körpers auf den gasgelagerten Drehlagern kann das Gaskissen dann wieder ausgeschaltet werden.

Fig. 4 zeigt eine weitere Ausführungsform einer Membran 1. Diese Ausführungsform der Membran umfaßt zwei Halbschalen 20 und 21. Die Halbschalen 20 und 21 werden dabei zu einer Membran zusammengesetzt, wobei die Gaszufuhr- und Gasabfuhrkammern zwischen den beiden Halbschalen 20, 21 definiert werden. Die Halbschalen 20 und 21 können ebenfalls durch Extrusion hergestellt werden. Ebenso können die Halbschalen 20 und 21 aber auch durch Schmelzguß gefertigt werden. Bei einer wie in Fig. 4 gezeigten Ausführungsform einer Membran können die Halbschalen auch verschiedene Materialien umfassen. Beispielsweise kann die untere Halbschale 21 ein hoch wärmeleitfähiges Material umfassen, so daß der Temperaturausgleich oder Temperaturangleich des in den Kammern befindlichen Levitationsgases noch beschleunigt wird.

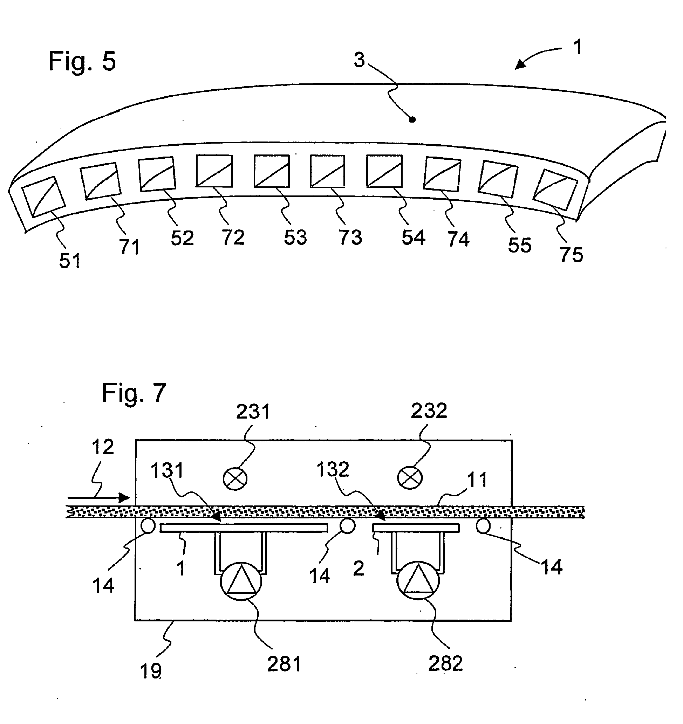

Noch eine weitere Ausführungsform einer Membran ist in Fig. 5 dargestellt. Diese Ausführungsform der Membran mit Kammern 51 bis 55 und 71 bis 75, von denen beispielsweise die Kammern 51 bis 55 als Gaszufuhrkammern und die Kammern 71 bis 75 als Gasabfuhrkammern verwendet werden können, weist außerdem eine gewölbte Oberfläche 3 auf. Diese kann beispielsweise zur Lagerung und/oder zum Transport von Glas oder Glaskeramik dienen. Insbesondere können mit einer derartigen Membran 1 aber auch gewölbte Gläser oder Glaskeramiken hergestellt werden.

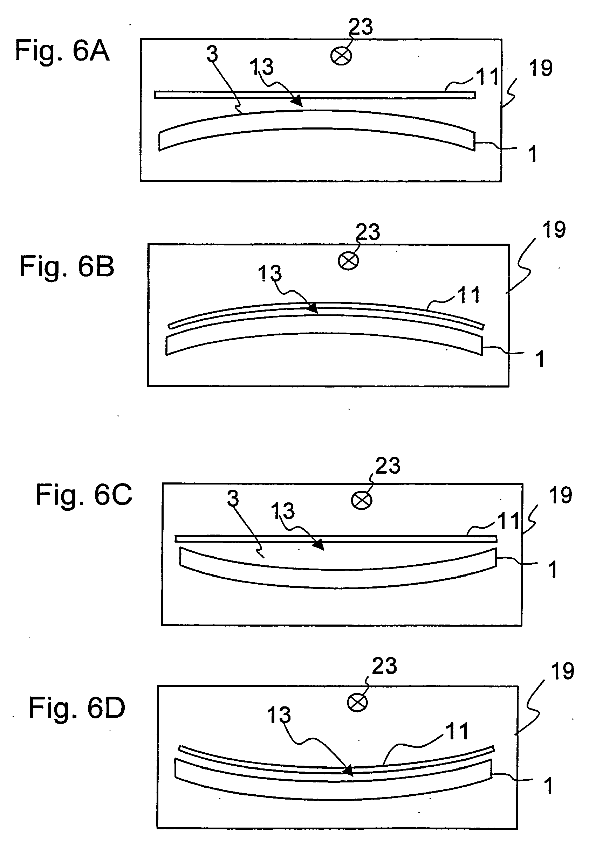

Verfahrensschritte zum Herstellen derartiger gewölbter Gläser oder Glaskeramiken sind beispielhaft anhand schematischer Querschnittansichten einer Ausführungsform einer als Ganzes mit 19 bezeichneten erfindungsgemäßen Vorrichtung in den Fig. 6A und 6B, sowie den Fig. 6C und 6D dargestellt.

Die dabei in den Fig. 6A bis 6D gezeigte erfindurigsgemäße Vorrichtung 19 ist dabei als Ofen, insbesondere als Keramisierungsofen zur Herstellung glaskeramischer Artikel ausgeführt.

Zunächst wird ein plattenförmiges Ausgangsglas 11 in üblicher Weise durch Heißformgebung geformt. Dieses wird anschließend in der Vorrichtung 19 mit einer darin angeordneten Membran 1 gebracht, so daß stich das Ausgangsglas, wie in Fig. 3A oder 3C dargestellt ist, oberhalb der Auflagefläche 3 befindet. Die Membran 1 weist ebenfalls wie die in Fig. 5 dargestellte Ausführungsform eine gewölbte Auflagefläche 3 auf. Diese ist in den Fig. 3A und 3B beispielhaft als konvex gewölbt dargestellt. Ebenso ist jedoch auch eine konkave Wölbung, wie sie die Membran 1 der in den Fig. 6C und 6D dargestellten Ausführungsform der Erfindung aufweist, oder eine Kombination aus konvex und konkav gewölbten Bereichen, wie beispielsweise bei einer wellenförmigen Oberfläche möglich.

Um das Ausgangsglas oberhalb der Membran 1 in Schwebe zu halten und so einen Kontakt zu vermeiden, wird durch Gaszuführung über in der Membran angeordnete Gaszufuhrkammern ein Gaskissen 13 zwischen der Unterlage und dem Ausgangsglas 11 erzeugt. Das Ausgangsgläs kann vorteilhaft zusätzlich seitlich gehalten oder geführt werden, um ein Wegdriften zu vermeiden.

Anschließend wird mittels einer in der Vorrichtung 19 angeordneten elektrischen Heizvorrichtung 23 das Ausgangsglas so weit erhitzt, daß dieses erweicht. Infolge der am Ausgangsglas angreifenden Schwerkraft wölbt sich dieses ebenfalls, wobei sich die weiter von der Auflagefläche 3 der Membran 1 entfernten Bereiche des Ausgangsglases absenken, bis durch das Gaskissen 13 eine im wesentlichen homogene Druckverteilung hergestellt ist. Ein Ausgleich und eine Homogenisierung der Druckverteilung wird dabei, wie vorstehend beschrieben, durch gasleitende Verbindungen zu in der Membran angeordnete Gasabfuhrkammern erreicht. Diesen Zustand zeigen die Fig. 6B, beziehungsweise 6D. Das Keramisieren auf der Unterlage 1 kann mit dem Wölbungsvorgang einhergehen oder anschließend vorgenommen werden.

In Fig. 7 ist eine Ausführungsform einer erfindungsgemäßen Vorrichtung zur kontinuierlichen Keramisierung eines Glasbandes dargestellt. Diese Ausführungsform einer erfindungsgemäßen Vorrichtung 19 umfaßt dementsprechend einen als Durchlaufofen ausgeführten Keramisierungsofen. Zur Keramisierung eines kontinuierlichen Glasrandes 11 sind in der Vorrichtung 19 zwei Membranen 1 und 2 angeordnet, die von Gasumwälzeinrichtungen 281 und 282 versorgt werden. Diese können dabei jeweils wie anhand von Fig. 1C dargestellt mit der Membran über Gasverteilungskammern verbunden sein.

Das kontinuierliche Glasband wird durch die Vorrichtung 19 transportiert und liegt an den Abschnitten des Transportweges im Bereich der Membranen auf den von diesen erzeugten Gaskissen 131 und 132 auf. Zusätzlich sind in der Vorrichtung zur weiteren Unterstützung des Bandes Drehlager 14 angeordnet, auf denen das Glasband aufliegt.

Den Membranen 1 und 2 sind Heizvorrichtungen 231 und 232 zugeordnet, um das Glasband in diesen Abschnitten zu erwärmen. Insbesondere kann das Glasband von den Heizvorrichtungen 231 und 232 auf jeweils unterschiedliche Temperaturen erwärmt werden.

Die Membranen sind unterschiedlich lang, so daß das Material des Glasbandes durch den Transport mit einer bestimmten Transportgeschwindigkeit ein zeitliches Temperaturprofil durchläuft. So kann das Glas auf der Membran 1 levitierend zunächst auf eine Temperatur T1 in einem Bereich von 650 bis 800 °C aufgeheizt und dann auf dieser Temperatur für eine Dauer von 0,5 bis 4 Stunden gehalten werden, um Kristallisationskeime im Glas zu bilden. Anschließend kann das Glas dann weiter auf eine Temperatur T2 in einem Bereich von 850 bis 950°C erhitzt und auf dieser Temperatur T2 für eine Dauer von etwa 5 bis 50 Minuten gehalten werden, während das Glas auf der Membran 2 levitierend transportiert wird. In dieser Phase wird das Glasband durchkristallisiert. Anschließend wird das keramisierte Glasband wieder auf Raumtemperatur abgetempert und verläßt als Glaskeramik die Vorrichtung. Beim Keramisieren wird dabei die Temperatur des Levitationspolsters mit einem Temperaturgradienten in Richtung entlang der Auflagefläche von kleiner 10 °C, bevorzugt kleiner 5 °C gehalten. Durch diese gleichmäßige Temperaturverteilung wird eine besonders gleichmäßige Keramisierung erreicht. Dies schlägt sich bei den so hergestellten Glaskeramik-Artikeln überraschend auch in einer signifikant erhöhten Festigkeit nieder.

Es ist dem Fachmann ersichtlich, dass die Erfindung nicht auf die vorstehend beschriebenen Ausführungsbeispiele beschränkt ist, sondern vielmehr in vielfältiger Weise variiert werden kann. Insbesondere können auch die Merkmale der einzelnen beispielhaften Ausführungsformen miteinander kombiniert werden.

## Patentansprüche

1. Vorrichtung (19) zum Transportieren und Lagern von Glaskeramik oder Glas, welche zumindest eine Membran (1, 2) umfaßt, die zumindest eine zusammenhängende Auflagefläche (3) und zumindest eine Gaszufuhrkammer (51 - 55) und zumindest eine Gasabfuhrkammer (71 - 75) aufweist, wobei die Gaszufuhrkammer (51 - 55) und die Gasabfuhrkammer (71 - 75) eine gasdurchlässige Verbindung zur Auflagefläche (3) aufweisen, **dadurch gekennzeichnet, daß** die Gaszufuhrkammer zumindest eine gasdurchlässige Verbindung zur Unterseite für die Zuführung von Gas in die Gaszufuhrkammer aufweist..

2. Vorrichtung gemäß Anspruch 1, **dadurch gekennzeichnet, daß** die zumindest eine Gaszufuhrkammer (51 - 55) und zumindest eine Gasabfuhrkammer (71 - 75) jeweils einen geschlossenen Kanal umfasst, wobei sich die geschlossenen Kanäle in Richtung entlang der Auflagefläche im Inneren der Membran erstrecken.

3. Vorrichtung gemäß Anspruch 1 oder 2, **dadurch gekennzeichnet, daß** die Gaszufuhrkammer nach unten hin zumindest teilweise durch eine Wandung begrenzt wird.

4. Vorrichtung gemäß einem der vorstehenden Ansprüche, , **gekennzeichnet durch** eine unter den Gasabfuhr- und Gaszufuhrkammern angeordnete Vorkammer, vorzugsweise mit keramischer Wandung, welche für die Zuführung von Gas in die Gaszufuhrkammer über zumindest eine gasdurchlässige Verbindung mit der Gaszufuhkammer verbunden ist.

5. Vorrichtung gemäß Anspruch 2, **dadurch gekennzeichnet, daß** die Kanäle gegenüber der Bodenfläche der Membran, die der Auflagefläche gegenüberliegt, geschlossen sind.

6. Vorrichung gemäß einem der vorstehenden Ansprüche, **dadurch gekennzeichnet, daß** die Gaszufuhrkammer (51 - 55) eine Gaseinlassöffnung und die Gasabfuhrkammer (71 - 75) eine Gasauslassöffnung aufweisen, die so angeordnet sind, daß die Gasflußrichtung innerhalb der Gaszufuhrkammer (51 - 55) und Gasabfuhrkammer (71 - 75) entlang der Auflagefläche verläuft.

7. Vorrichtung gemäß einem der vorstehenden Ansprüche, **dadurch gekennzeichnet, daß** die Membran (1, 2) aus extrudiertem Material hergestellt ist.

8. Vorrichtung gemäß einem der vorstehenden Ansprüche, **dadurch gekennzeichnet, daß** die Membran (1, 2) zwei aufeinandergesetzte Halbschalen (20, 21) umfaßt.

9. Vorrichtung gemäß einem der vorstehenden Ansprüche, **dadurch gekennzeichnet, daß** die gasdurchlässige Verbindung ein poröses Material umfaßt.

10. Vorrichtung gemäß einem der vorstehende Ansprüche, **dadurch gekennzeichnet, daß** die gasdurchlässige Verbindung Verbindungskanäle (91 - 93, 95, 101 - 103, 105) umfaßt, welche mit der Auflagefläche (3) verbunden sind.

11. Vorrichtung gemäß Anspruch 10, wobei die Verbindungskanäle (91 - 93, 95, 101 - 103, 105) senkrecht zu einer Transportrichtung (12) für das Glas oder die Glaskeramik versetzt angeordnet sind.

12. Vorrichtung gemäß einem der vorstehende Ansprüche, **dadurch gekennzeichnet, daß** die Gaszufuhrkammer (51 - 55) und die Gasabfuhrkammer (71 - 75) eine entlang einer Richtung (18) langgestreckte Form aufweisen und entlang dieser Richtung (18) parallel zueinander verlaufen.

13. Vorrichtung gemäß Anspruch 12, **dadurch gekennzeichnet, daß** die gasdurchlässige Verbindung Verbindungskanäle (91 - 93, 101 - 103, 95, 105) umfaßt, welche mit der Auflagefläche (3) verbunden sind und welche in einer oder mehrerer Reihen entlang der Richtung (18) angeordnet sind, entlang welcher sich die Kammern (51, 52, 53, 71, 72, 73) langgestreckt sind.

14. Vorrichtung gemäß Anspruch 12 oder 13, **dadurch gekennzeichnet, daß** die Membran (1, 2) so angeordnet ist, daß die Richtung (18), entlang welcher die Gaszufuhrkammer (51 - 55) und die Gasabfuhhrkammer (71 -75) eine langgestreckte Form aufweisen, im wesentlichen senkrecht zu einer Transportrichtung (12) für Glas oder Glaskeramik verläuft.

15. Vorrichtung gemäß einem der vorstehenden Ansprüche, **dadurch gekennzeichnet, daß** die Membran (1, 2) eine Mehrzahl von Gaszufuhrkammern (51 - 55) und eine Mehrzahl von Gasabfuhrkammern (51 - 75) aufweist, die entlang einer Richtung (12) abwechselnd angeordnet sind.

16. Vorrichtung gemäß einem der vorstehenden Ansprüche, **gekennzeichnet durch** zumindest ein Drehlager (14) zur Lagerung von Glaskeramik oder Glas.

17. Vorrichtung gemäß Anspruch 16, **dadurch gekennzeichnet, daß** das Drehlager (14) eine Kugel umfaßt.

18. Vorrichtung gemäß Anspruch 16 oder 17, **dadurch gekennzeichnet, daß** das Drehlager (14) eine Rolle umfaßt.

19. Vorrichtung gemäß einem der Ansprüche 16 bis 18, **dadurch gekennzeichnet, daß** das Drehlager (14) gasgelagert ist.

20. Vorrichtung gemäß einem der Ansprüche 16 bis 19, **dadurch gekennzeichnet, daß** das Drehlager (14) in die Auflagefläche (3) eingesenkt ist.

21. Vorrichtung gemäß einem der Ansprüche 16 bis 20, **dadurch gekennzeichnet, daß** das Drehlager (14) höchstens um die Hälfte der Schwebehöhe des Glases oder der Glaskeramik (11) aus der Auflagefläche (3) hinausragt.

22. Vorrichtung gemäß einem der vorstehenden Ansprüche, **dadurch gekennzeichnet, daß** die Membran (1, 2) eine gewölbte Auflagefläche (3) aufweist.

23. Vorrichtung gemäß einem der vorstehenden Ansprüche, **dadurch gekennzeichnet, daß** sie einen Keramisierungsofen umfaßt.

24. Vorrichtung gemäß einem der vorstehenden Ansprüche, **gekennzeichnet durch** eine erste Gasverteilungskammer (25), welche mit der zumindest einen Gaszufuhrkammer (51 - 55) an einer ersten Kante (24) der Membran (1) verbunden ist und eine zweite Gasverteilungskammer (27), welche an einer zweiten, der ersten Kante (24) gegenüberliegenden Kante (26) der Membran (1) mit der zumindest einen Gasabfuhrkammer (71 - 75) verbunden ist.

25. Verfahren zum Transport und Lagerung von Glas und Glaskeramik (11), insbesondere mittels einer Vorrichtung (19) gemäß einem der Ansprüche 1 bis 24, wobei das Glas oder die Glaskeramik (11) auf einem Gaskissen (13) aufliegt, welches über einer zusammenhängenden Auflagefläche (3) einer Membran (1, 2) erzeugt wird, wobei Levitationsgas dem Gaskissen (13) über zumindest eine in der Membran (1, 2) angeordnete, mit der Auflagefläche (3) durch eine glasleitende Verbindung verbundene Gaszufuhrkammer (51 - 55) zugeführt wird, und wobei Levitationsgas des Gaskissens (13) über zumindest eine in der Membran (1, 2) angeordnete, mit der Auflagefläche (3) durch eine gasleitende Verbindung verbundene Gasabfuhrkammer (71 - 75) zumindest teilweise wieder abgeführt wird, **dadurch gekennzeichnet, daß** die Gaszufuhrkammer nach unten hin zumindest teilweise abgeschlossen ist, wobei das Levitationsgas in die Gaszufuhrkammer durch eine nach unten gerichtete gasdurchlässige Verbindung in der Membran in die Gaszufuhrkammer eingeführt wird.

26. Verfahren gemäß Anspruch 25, **dadurch gekennzeichnet, daß** das Levitationsgas über zumindest eine Gaszufuhrkammer (51 - 55) zugeführt und über zumindest eine Gasabfuhrkammer (71 - 75) abgeführt wird, die jeweils geschlossene Kanäle umfassen, welche sich in Richtung entlang der Auflagefläche im Inneren der Membran erstrecken.

27. Verfahren gemäß Anspruch 25 oder 26, wobei durch eine unter den Gasabfuhr- und Gaszufuhrkammern angeordnete Vorkammer Gas in die Gaszufuhrkammer über zumindest eine gasdurchlässige Verbindung eingeführt wird.

28. Verfahren gemäß einem der vorstehenden Ansprüche, **dadurch gekennzeichnet, daß** das Levitationsgas in der Gaszufuhrkammer (51 - 55) und der Gasabfuhrkammer in der Membran quer zur Normalen der Auflagefläche, insbesondere in Richtung entlang der Auflagefläche strömt.

29. Verfahren gemäß einem der vorstehenden Ansprüche, **dadurch gekennzeichnet, daß** das Levitationsgas beim Durchströmen der Gaszufuhrkammer (51 - 55) oder der Gasabfuhrkammer (71 - 75) einen Druckabfall von höchstens 0,5 mBar erfährt.

30. Verfahren gemäß einem der vorstehenden Ansprüche, **dadurch gekennzeichnet, daß** auf dem Gaskissen aufliegendes Material keramisiert wird.

31. Verfahren gemäß einem der vorstehenden Ansprüche, **dadurch gekennzeichnet, daß** Glas zunächst auf eine Temperatur T1 in einem Bereich von 650 bis 800 °C aufgeheizt und dann auf dieser Temperatur für eine Dauer von 0,5 bis 4 Stunden gehalten, weiter auf eine Temperatur T2 in einem Bereich von 850 bis 950°C erhitzt und auf dieser Temperatur T2 für eine Dauer von etwa 5 bis 50 Minuten gehalten und anschließend auf Raumtemperatur abgetempert wird.

32. Verfahren gemäß einem der vorstehenden Ansprüche, wobei die Gaszuleitung und die Gasableitung von und zur Membran (1, 2) von gegenüberliegenden Kanten (24, 26) der Membran (1, 2) her erfolgt.

33. Verfahren gemäß einem der vorstehenden Ansprüche, **dadurch gekennzeichnet, daß** ein Druckgefälle zwischen Gaszufuhr- (51 - 55) und Gasabfuhrkammer (71 - 75) eingestellt wird.

34. Verfahren gemäß einem der vorstehenden Ansprüche, wobei die Membran (1) eine gewölbte Auflagefläche (3) aufweist, **dadurch gekennzeichnet, daß** das Glas oder die Glaskeramik (11) in erwärmtem Zustand durch Schwerkraftsenken über der Auflagefläche (3) der Membran (1, 2) gewölbt wird.

35. Verfahren gemäß einem der vorstehenden Ansprüche, **dadurch gekennzeichnet, daß** ein kontinuierliches Glas- oder Glaskeramikband (11) transportiert wird, wobei das Band an zumindest einem Abschnitt des Transportweges auf einem Gaskissen (131, 132) aufliegt.

36. Verfahren gemäß einem der vorstehenden Ansprüche, **dadurch gekennzeichnet, daß** das Levitationsgas zumindest teilweise umgewälzt wird.

37. Verfahren gemäß einem der vorstehenden Ansprüche, wobei das Glas oder die Glaskeramik (11) während des Aufliegens auf dem Gaskissen (13) entlang zumindest einer Richtung entlang der Oberfläche der Auflagefläche (3), insbesondere während einer Keramisierung hin und her bewegt wird.

38. Verfahren gemäß Anspruch 37, wobei in der Membran (1) Gaszufuhrkammern und Gasabfuhrkammern entlang einer Richtung abwechselnd angeordnet sind, **dadurch gekennzeichnet, daß** das Glas oder die Glaskeramik entlang dieser Richtung mit einer Auslenkung hin und her bewegt wird, die wenigstens so groß ist, wie die Periode der abwechselnden Anordnung.

39. Verfahren gemäß Anspruch 38, wobei die Gaszufuhrkammern und Gasabfuhrkammern Verbindungskanäle (91 - 93, 101 - 103, 95, 105) zur Auflagefläche (3) aufweisen, die senkrecht zu der Richtung, entlang welcher die Kammer abwechselnd angeordnet sind, versetzt angeordnet sind, **dadurch gekennzeichnet, daß** das Hin- und Herbewegen mit einer Auslenkung erfolgt, die mindestens so groß ist, wie die Versetzungsperiode der Verbindungskanäle (91 - 93, 101 - 103, 95, 105).

40. Verfahren gemäß einem der vorstehenden Ansprüche, **dadurch gekennzeichnet, daß** die Temperatur des Levitationspolsters mit einem Temperaturgradienten in Richtung entlang der Auflagefläche von kleiner 10 °C, bevorzugt kleiner 5 °C gehalten wird.

41. Verfahren gemäß einem der vorstehenden Ansprüche, **dadurch gekennzeichnet, daß** das Glas oder die Glaskeramik (11) durch das Levitationspolster in einer Höhe von zumindest 750 Mikrometern, vorzugsweise bis höchstens 2 Millimetern oberhalb der Auflagefläche gehalten wird.

## Claims

1. A device (19) for transporting and supporting glass ceramic or glass, which comprises at least one diaphragm (1, 2) that has at least one continuous bearing surface (3) and at least one gas feed chamber (51 - 55) and at least one gas discharge chamber (71 - 75), the gas feed chamber (51 - 55) and the gas discharge chamber (71 - 75) having a gas-permeable connection to the bearing surface (3), **characterized in that** the gas feed chamber has at least one gas-permeable connection to the lower side in order to feed gas into the gas feed chamber.

2. The device according to claim 1, **characterized in that** the at least one gas feed chamber (51 - 55) and at least one gas discharge chamber (71 - 75) respectively comprise a closed channel, the closed channel extending in the direction along the bearing surface inside the diaphragm.

3. The device according to claim 1 or 2, **characterized in that** the gas feed chamber is bounded at least partially at the bottom by a wall.

4. The device according to any of the preceding claims, **characterized by** an antechamber arranged below the gas feed and gas discharge chambers, which preferably has a ceramic wall and which is connected via at least one gas-permeable connection to the gas feed chamber in order to feed gas into the gas feed chamber.

5. The device according to claim 2, **characterized in that** the channels are closed towards the bottom surface of the diaphragm, which is opposite the bearing surface.

6. The device according to any of the preceding claims, **characterized in that** the gas feed chamber (51 - 55) has a gas inlet opening and the gas discharge chamber (71 - 75) has a gas outlet opening, which are arranged so that the gas flow direction within the gas feed chamber (51 - 55) and the gas discharge chamber (71 - 75) extends along the bearing surface.

7. The device according to any of the preceding claims, **characterized in that** the diaphragm (1, 2) is made from an extruded material.

8. The device according to any of the preceding claims, **characterized in that** the diaphragm (1, 2) comprises two half-shells (20, 21) placed onto one another.

9. The device according to any of the preceding claims, **characterized in that** the gas-permeable connection comprises a porous material.

10. The device according to any of the preceding claims, **characterized in that** the gas-permeable connection comprises connecting channels (91 - 93, 95, 101 - 103, 105), which are connected to the bearing surface (3).

11. The device according to claim 10, wherein the connecting channels (91 - 93, 95, 101 - 103, 105) are arranged offset perpendicularly to a transport direction (12) for the glass or the glass ceramic.

12. The device according to any of the preceding claims, **characterized in that** the gas feed chamber (51 - 55) and the gas discharge chamber (71 - 75) have a shape elongated along a direction (18) and extend mutually parallel along this direction (18).

13. The device according to claim 12, **characterized in that** the gas-permeable connection comprises connecting channels (91 - 93, 101 - 103, 95, 105), which are connected to the bearing surface (3) and which are arranged in one or more rows along the direction (18) along which the chambers (51, 52, 53, 71, 72, 73) are elongated.

14. The device according to claim 12 or 13, **characterized in that** the diaphragm (1, 2) is arranged so that the direction (18), along which the gas feed chamber (51 - 55) and the gas discharge chamber (71 - 75) have an elongated shape, essentially extends perpendicularly to a transport direction (12) for glass or glass ceramic.

15. The device according to any of the preceding claims, **characterized in that** the diaphragm (1, 2) has a plurality of gas feed chambers (51 - 55) and a plurality of gas discharge chambers (71 - 75), which are arranged alternately along a direction (12).

16. The device according to any of the preceding claims, **characterized by** at least one rolling bearing (14) for supporting glass ceramic or glass.

17. The device according to claim 16, **characterized in that** the rolling bearing (14) comprises a ball.

18. The device according to claim 16 or 17, **characterized in that** the rolling bearing (14) comprises a roller.

19. The device according to any of claims 16 to 18, **characterized in that** the rolling bearing (14) is gas-supported.

20. The device according to any of claims 16 to 19, **characterized in that** the rolling bearing (14) is sunk into the bearing surface (3).

21. The device according to any of claims 16 to 20, **characterized in that** the rolling bearing (14) protrudes out of the bearing surface (3) by at most half the levitation height of the glass or glass ceramic (11).

22. The device according to any of the preceding claims, **characterized in that** the diaphragm (1, 2) has a curved bearing surface (3).

23. The device according to any of the preceding claims, **characterized in that** it comprises a ceramizing oven.

24. The device according to any of the preceding claims, **characterized by** a first gas distribution chamber (25) which is connected to the at least one gas feed chamber (51 - 55) on a first edge (24) of the diaphragm (1), and a second gas distribution chamber (27) which is connected to the at least one gas discharge chamber (71 - 75) on a second edge (26) of the diaphragm (1), opposite the first edge (24).

25. A method for transporting and supporting glass and glass ceramic (11), in particular by means of a device (19) according to any of claims 1 to 24, wherein the glass or glass ceramic (11) rests upon a gas cushion (13) which is generated over a continuous bearing surface (3) of a diaphragm (1, 2), wherein levitation gas is supplied to the gas cushion (13) via at least one gas feed chamber (51 - 55) arranged in the diaphragm (1, 2) and connected to the bearing surface (3) by a gas-carrying connection, and wherein the levitation gas of the gas cushion (13) is at least partially discharged via at least one gas discharge chamber (71 - 75) arranged in the diaphragm (1, 2) and connected to the bearing surface (3) by a gas-carrying connection, **characterized in that** the gas feed chamber is at least partially closed at the bottom, the levitation gas being introduced into the gas feed chamber through a downwardly directed gas-permeable connection in the diaphragm.

26. The method according to claim 25, **characterized in that** the levitation gas is supplied via at least one gas feed chamber (51 - 55) and is discharged via at least one gas discharge chamber (71 - 75) which respectively comprise closed channels that extend in the direction along the bearing surface inside the diaphragm.

27. The method according to claim 25 or 26, **characterized in that** gas is introduced into the gas feed chamber via at least one gas-permeable connection through an antechamber, arranged below the gas feed and gas discharge chambers.

28. The method according to any of the preceding claims, **characterized in that** the levitation gas in the gas feed chamber (51 - 55) and the gas discharge chamber flows in the diaphragm transversely to the normal of the bearing surface, in particular in a direction along the bearing surface.

29. The method according to any of the preceding claims, **characterized in that** the levitation gas experiences a pressure drop of at least 0.5 mbar when flowing through the gas feed chamber (51 - 55) or the gas discharge chamber (71 - 75).

30. The method according to any of the preceding claims, **characterized in that** a material resting on the gas cushion is ceramized.

31. The method according to any of the preceding claims, **characterized in that** the glass is first heated to a temperature T1 in a range from 650 to 800 °C and is then kept at this temperature for a duration from 0.5 to 4 hours, is heated further to a temperature T2 in a range from 850 to 950 °C and kept at this temperature T2 for a duration of about 5 to 50 minutes, and is subsequently tempered down to room temperature.

32. The method according to any of the preceding claims, wherein the gas feed and gas discharge from and to the diaphragm (1, 2) take place on opposite edges (24, 26) of the diaphragm (1, 2).

33. The method according to any of the preceding claims, **characterized in that** a pressure gradient is set up between the gas feed (51 - 55) and gas discharge chamber (71 - 75).

34. The method according to any of the preceding claims, wherein the diaphragm (1) has a curved bearing surface (3), **characterized in that** the glass or the glass ceramic (11) in a heated state is curved by gravitational sinking over the bearing surface (3) of the diaphragm (1, 2).

35. The method according to any of the preceding claims, **characterized in that** a continuous glass or glass ceramic strip (11) is transported, the strip resting on a gas cushion (131, 132) at least in a section of the transport path.

36. The method according to any of the preceding claims, **characterized in that** the levitation gas is at least partially recirculated.

37. The method according to any of the preceding claims, wherein the glass or glass ceramic (11) is reciprocated along at least one direction along the surface of the bearing surface (3) while resting on the gas cushion (13), in particular during ceramization.

38. The method according to claim 37, wherein the gas feed chambers and gas discharge chambers are arranged alternately along a direction in the diaphragm (1), **characterized in that** the glass or glass ceramic is reciprocated along this direction, with an excursion which is at least as great as the period of the alternating arrangement.

39. The method according to claim 38, wherein the gas feed chambers and gas discharge chambers have connecting channels (91 - 93, 101 - 103, 95, 105) to the bearing surface (3) which are arranged offset perpendicularly to the direction along which the chambers are arranged alternately, **characterized in that** said reciprocation occurs with an excursion which is at least as great as the offset period of the connecting channels (91 - 93, 101 - 103, 95, 105).

40. The method according to any of the preceding claims, **characterized in that** the temperature of the levitation cushion is kept with a temperature gradient of less than 10 °C, preferably less than 5 °C, in the direction along the bearing surface.

41. The method according to any of the preceding claims, **characterized in that** the glass or glass ceramic (11) is kept at a height of at least 750 micrometers, preferably to at most 2 millimeters, above the bearing surface, by the levitation cushion.

## Revendications

1. Dispositif (19) pour le transport et le stockage de vitrocéramique ou de verre, comprenant au moins une membrane (1, 2) qui présente au moins une surface d'appui (3) cohérente et au moins une chambre d'arrivée de gaz (51 - 55) et au moins une chambre d'évacuation de gaz (71 - 75), la chambre d'arrivée de gaz (51 - 55) et la chambre d'évacuation de gaz (71 - 75) présentant une liaison perméable aux gaz pour la surface d'appui (3), **caractérisé en ce que** la chambre d'arrivée de gaz présente au moins une liaison perméable au gaz avec le côté inférieur pour l'arrivée de gaz dans la chambre d'arrivée de gaz.

2. Dispositif selon la revendication 1, **caractérisé en ce que** la au moins une chambre d'arrivée de gaz (51 - 55) et au moins une chambre d'évacuation de gaz (71 - 75) comprennent chacune un canal fermé, les canaux fermés s'étendant dans la direction le long de la surface d'appui à l'intérieur de la membrane.

3. Dispositif selon la revendication 1 ou 2, **caractérisé en ce que** la chambre d'arrivée de gaz est délimitée vers le bas au moins en partie par une paroi.

4. Dispositif selon l'une quelconque des revendications précédentes, **caractérisé par** une préchambre disposée au-dessous des chambres d'évacuation de gaz et d'arrivée de gaz, dotée de préférence d'une paroi céramique, qui est reliée pour l'arrivée de gaz dans la chambre d'arrivée de gaz par au moins une liaison perméable aux gaz avec la chambre d'arrivée de gaz.

5. Dispositif selon la revendication 2, **caractérisé en ce que** les canaux sont fermés par rapport à la surface de fond de la membrane qui fait face à la surface d'appui.

6. Dispositif selon l'une quelconque des revendications précédentes, **caractérisé en ce que** la chambre d'arrivée de gaz (51 - 55) présente une ouverture d'entrée de gaz et la chambre d'évacuation de gaz (71 - 75) une ouverture de sortie de gaz, qui sont disposées de telle sorte que le sens de flux de gaz à l'intérieur de la chambre d'arrivée de gaz (51 - 55) et de la chambre d'évacuation de gaz (71 - 75) s'étend le long de la surface d'appui.

7. Dispositif selon l'une quelconque des revendications précédentes, **caractérisé en ce que** la membrane (1, 2) est fabriquée à base de matériau extrudé.

8. Dispositif selon l'une quelconque des revendications précédentes, **caractérisé en ce que** la membrane (1, 2) comprend deux demi-coques (20, 21) posées l'une sur l'autre.

9. Dispositif selon l'une quelconque des revendications précédentes, **caractérisé en ce que** la liaison perméable aux gaz comprend un matériau poreux.

10. Dispositif selon l'une quelconque des revendications précédentes, **caractérisé en ce que** la liaison perméable aux gaz comprend des canaux de liaison (91 - 93, 95, 101 - 103, 105) qui sont reliés à la surface d'appui (3).

11. Dispositif selon la revendication 10, dans lequel les canaux de liaison (91 - 93, 95, 101 - 103, 105) sont disposés en décalé perpendiculairement à une direction de transport (12) pour le verre ou la vitrocéramique.

12. Dispositif selon l'une quelconque des revendications précédentes, **caractérisé en ce que** la chambre d'arrivée de gaz (51 - 55) et la chambre d'évacuation de gaz (71 - 75) présentent une forme étirée en longueur le long d'une direction (18) et sont agencées le long de cette direction (18) parallèlement entre elles.

13. Dispositif selon la revendication 12, **caractérisé en ce que** la liaison perméable aux gaz comprend des canaux de liaison (91 - 93, 101 - 103, 95, 105), qui sont reliés à la surface d'appui (3) et sont disposés dans une ou plusieurs rangées le long de la direction (18) le long de laquelle les chambres (51, 52, 53, 71, 72, 73) sont étirées en longueur.

14. Dispositif selon la revendication 12 ou 13, **caractérisé en ce que** la membrane (1, 2) est disposée de telle sorte que la direction (18), le long de laquelle la chambre d'arrivée de gaz (51 - 55) et la chambre d'évacuation de gaz (71 - 75) présentent une forme étirée en longueur, est disposée sensiblement perpendiculairement à une direction de transport (12) pour du verre ou de la vitrocéramique.

15. Dispositif selon l'une quelconque des revendications précédentes, **caractérisé en ce que** la membrane (1, 2) présente une pluralité de chambres d'arrivée de gaz (51 - 55) et une pluralité de chambres d'évacuation de gaz (51 - 75), qui sont disposées en alternance le long d'une direction (12).

16. Dispositif selon l'une quelconque des revendications précédentes, **caractérisé par** au moins un palier rotatif (14) pour le stockage de vitrocéramique ou du verre.

17. Dispositif selon la revendication 16, **caractérisé en ce que** le palier rotatif (14) comprend une sphère.

18. Dispositif selon la revendication 16 ou 17, **caractérisé en ce que** le palier rotatif (14) comprend un galet.

19. Dispositif selon les revendications 16 à 18, **caractérisé en ce que** le palier rotatif (14) est monté sur du gaz.

20. Dispositif selon l'une quelconque des revendications 16 à 19, **caractérisé en ce que** le palier rotatif (14) est enfoncé dans la surface d'appui (3).

21. Dispositif selon l'une quelconque des revendications 16 à 20, **caractérisé en ce que** le palier rotatif (14) dépasse de la surface d'appui (3) au maximum de la moitié de suspension du verre ou de la vitrocéramique (11).

22. Dispositif selon l'une quelconque des revendications précédentes, **caractérisé en ce que** la membrane (1,2) présente une surface d'appui (3) incurvée.

23. Dispositif selon l'une quelconque des revendications précédentes, **caractérisé en ce qu'**il comprend un four de céramisation.

24. Dispositif selon l'une quelconque des revendications précédentes, **caractérisé par** une première chambre de répartition de gaz (25), qui est reliée à la au moins une chambre d'arrivée de gaz (51 - 55) sur une première arête (24) de la membrane (1) et une seconde chambre de répartition de gaz (27), qui est reliée à la au moins une chambre d'évacuation de gaz (71 - 75) sur une seconde arête (26), faisant face à la première arête (24), de la membrane (1).

25. Procédé pour le transport et le stockage de verre et de vitrocéramique (11), en particulier au moyen d'un dispositif (19) selon l'une quelconque des revendications 1 à 24, le verre ou la vitrocéramique (11) reposant sur un coussin de gaz (13), lequel est généré au-dessus d'une surface d'appui (3) cohérente d'une membrane (1, 2), du gaz de lévitation étant amené au coussin de gaz (13) au moyen d'au moins une chambre d'arrivée de gaz (51 - 55) disposée dans la membrane (1, 2) et reliée à la surface d'appui (3) par une liaison d'acheminement du gaz, et du gaz de lévitation du coussin de gaz (13) étant évacué à nouveau au moins partiellement au moyen d'au moins une chambre d'évacuation de gaz (71 - 75) disposée dans la membrane (1, 2) et reliée à la surface d'appui (3) par une liaison d'acheminement de gaz, **caractérisé en ce que** la chambre d'arrivée de gaz est au moins partiellement fermée vers le bas, le gaz de lévitation étant introduit dans la chambre d'arrivée de gaz par une liaison perméable aux gaz et dirigée vers le bas dans la membrane.

26. Procédé selon la revendication 25, **caractérisé en ce que** le gaz de lévitation est amené au moyen d'au moins une chambre d'arrivée de gaz (51 - 55) et évacué par au moins une chambre d'évacuation de gaz (71 - 75), lesquelles comprennent respectivement des canaux fermés qui s'étendent dans la direction le long de la surface d'appui à l'intérieur de la membrane.

27. Procédé selon la revendication 25 ou 26, du gaz étant introduit par une préchambre disposée en dessous des chambres d'évacuation et d'arrivée de gaz dans la chambre d'arrivée de gaz au moyen d'au moins une liaison perméable aux gaz.

28. Procédé selon l'une quelconque des revendications précédentes, **caractérisé en ce que** le gaz de lévitation circule dans la chambre d'arrivée de gaz (51 - 55) et la chambre d'évacuation de gaz dans la membrane transversalement à la verticale de la surface d'appui, en particulier dans la direction le long de la surface d'appui.

29. Procédé selon l'une quelconque des revendications précédentes, **caractérisé en ce que** le gaz de lévitation subit une chute de pression maximale de 0,5 mBar lors de la traversée de la chambre d'arrivée de gaz (51 - 55) ou de la chambre d'évacuation de gaz (71 - 75).

30. Procédé selon l'une quelconque des revendications précédentes, **caractérisé en ce que** du matériau reposant sur le coussin de gaz est céramisé.

31. Procédé selon l'une quelconque des revendications précédentes, **caractérisé en ce que** du verre est chauffé d'abord jusqu'à une température T1 dans une plage allant de 650 à 800°C, puis maintenu à cette température pour une durée de 0,5 à 4 heures, chauffé à nouveau à une température T2 comprise entre 850 et 950°C et maintenu à cette température T2 pour une durée d'environ 5 à 50 minutes et est abaissé ensuite à la température ambiante.

32. Procédé selon l'une quelconque des revendications précédentes, l'arrivée et l'évacuation de gaz au départ de la membrane et vers la membrane (1, 2) s'effectuent à partir d'arêtes (24, 26) opposées de la membrane (1, 2).

33. Procédé selon l'une quelconque des revendications précédentes, **caractérisé en ce qu'**une chute de pression entre la chambre d'arrivée de gaz (51 - 55) et la chambre d'évacuation de gaz (71 - 75) est réglée.

34. Procédé selon l'une quelconque des revendications précédentes, la membrane (1) présentant une surface d'appui (3) incurvée, **caractérisé en ce que** le verre ou la vitrocéramique (11) est incurvé dans l'état réchauffé par abaissement de la force de gravité au-dessus de la surface d'appui (3) de la membrane (1, 2).

35. Procédé selon l'une quelconque des revendications précédentes, **caractérisé en ce qu'**une bande continue de verre ou de vitrocéramique (11) est transportée, la bande reposant sur au moins une partie de la course de transport sur un coussin de gaz (131, 132).

36. Procédé selon l'une quelconque des revendications précédentes, **caractérisé en ce que** le gaz de lévitation est remis au moins partiellement en circulation.

37. Procédé selon l'une quelconque des revendications précédentes, le verre ou la vitrocéramique (11) étant déplacé(e) d'un côté et de l'autre pendant l'appui sur le coussin de gaz (13) le long d'au moins une direction le long de la surface d'appui (3), en particulier pendant une céramisation.

38. Procédé selon la revendication 37, les chambres d'arrivée de gaz et des chambres d'évacuation de gaz étant disposées alternativement le long d'une direction dans la membrane (1), **caractérisé en ce que** le verre ou la vitrocéramique est déplacé d'un côté et de l'autre le long de cette direction avec une déviation qui est au moins aussi grande que la période de l'agencement alternatif.

39. Procédé selon la revendication 38, les chambres d'arrivée de gaz et les chambres d'évacuation de gaz présentant des canaux de liaison (91 - 93, 101 - 103, 95, 105) pour la surface d'appui (3), qui sont disposés en décalé perpendiculairement à la direction le long de laquelle les chambres sont disposées en alternance, **caractérisé en ce que** le déplacement d'un côté et de l'autre s'effectue avec une déviation qui est au moins aussi grande que la période de décalage des canaux de liaison (91 - 93, 101 - 103, 95, 105).

40. Procédé selon l'une quelconque des revendications précédentes, **caractérisé en ce que** la température du rembourrage de lévitation est maintenue avec un gradient de température en direction le long de la surface d'appui de moins de 10°C, de préférence de moins de 5°C.

41. Procédé selon l'une quelconque des revendications précédentes, **caractérisé en ce que** le verre ou la vitrocéramique (11) est maintenu par le matelas de lévitation à une hauteur d'au moins 750 micromètres, de préférence jusqu'à au maximum 2 millimètres au-dessus de la surface d'appui.
